# EUROPEAN PATENT APPLICATION

(11) **EP 3 647 734 A1**
(43) Date of publication of application: **06.05.2020**
(21) Application number: 19205572.1
(22) Date of filing: 28.10.2019
(51) Int. Cl.: G01C 21/36, G01C 21/32

(54) **AUTOMATIC GENERATION OF DIMENSIONALLY REDUCED MAPS AND SPATIOTEMPORAL LOCALIZATION FOR NAVIGATION OF A VEHICLE**

(30) Priority: 29.10.2018 US 201862752297 P; 19.02.2019 US 201962807652 P
(71) Applicant: Aptiv Technologies Limited, 14004 St. Michael (BB)
(72) Inventor: CHONG, Zhuang Jie, 579800 Singapore (SG)
(74) Representative: Baptiste, Nathalie

(57) **Abstract**

Among other things, we describe techniques for generation of dimensionally reduced maps and localization in an environment for navigation of vehicles. The techniques include generating, using one or more sensors of a vehicle located at a spatiotemporal location within an environment, M-dimensional sensor data representing the environment, wherein M is greater than 2. Odometry data is generated representing an operational state of the vehicle. The odometry data is associated with the spatiotemporal location. An N-dimensional map is generated of the environment from the M-dimensional sensor data, wherein N is less than M. The generating of the N-dimensional map comprises extracting an M-dimensional environmental feature of the spatiotemporal location from the M-dimensional sensor data. The M-dimensional environmental feature is associated with the odometry data. An N-dimensional version of the M-dimensional environmental feature is generated. The N-dimensional version of the M-dimensional environmental feature is embedded within the N-dimensional map.

## Description

This application claims the benefit of U.S. Provisional Application 62/752,297, filed on October 29, 2018, and U.S. Provisional Application 62/807,652, filed on February 19, 2019, both of which are incorporated herein by reference in their entirety.

### FIELD OF THE INVENTION

This description relates generally to navigation planning for vehicles and specifically to automatic generation of dimensionally reduced maps and spatiotemporal localization for navigation of vehicles.

### BACKGROUND

Autonomous vehicles (AVs) have the potential to transform transportation systems by reducing road fatalities, traffic congestion, parking congestion, and fuel efficiency. However, conventional methods for navigation of autonomous vehicles often rely on traditional low-resolution maps and are insufficient for precise localization of an AV. Moreover, conventional methods for navigation are inadequate to address the problems of data noise and uncertainty. In addition, during navigation of an AV using conventional methods, the AV may be unable to distinguish between two or more plausible spatiotemporal locations within a traditional low-resolution map.

### SUMMARY

Techniques are provided for automatic generation of dimensionally reduced maps and spatiotemporal localization for navigation of vehicles. The techniques include generating M-dimensional sensor data representing an environment where a vehicle is located, wherein M is greater than 2. One or more sensors of the vehicle generate the M-dimensional sensor data. The vehicle is located at a spatiotemporal location within the environment. The one or more sensors generate odometry data representing an operational state of the vehicle. The odometry data is associated with the spatiotemporal location. Using one or more processors of the vehicle, an N-dimensional map is generated of the environment from the M-dimensional sensor data, wherein N is less than M. The generating of the N-dimensional map includes extracting an M-dimensional environmental feature of the spatiotemporal location from the M-dimensional sensor data. The M-dimensional environmental feature is associated with the odometry data. An N-dimensional version of the M-dimensional environmental feature is generated. The N-dimensional version of the M-dimensional environmental feature is embedded within the N-dimensional map.

In one embodiment, one or more sensors of a vehicle are used to generate visual data representing a physical feature at a spatiotemporal location where the vehicle is located. The visual data includes a plurality of pixels corresponding to a plurality of two-dimensional planes that represent the physical feature. The visual data is used to determine a depth difference between a first pixel of the plurality of pixels and a second pixel. The first pixel corresponds to a first two-dimensional plane of the plurality of two-dimensional planes and the second pixel corresponds to a second two-dimensional plane of the plurality of two-dimensional planes. One or more processors of the vehicle are used to embed the depth difference within a third two-dimensional plane. The third two-dimensional plane represents a map. The depth difference is embedded within the map at the spatiotemporal location

In one embodiment, the embedding of the N-dimensional version of the M-dimensional environmental feature includes embedding a computer-readable semantic annotation corresponding to the N-dimensional version of the M-dimensional environmental feature within the N-dimensional map.

In one embodiment, the M-dimensional sensor data includes three-dimensional LiDAR point cloud data and the generating of the N-dimensional version of the M-dimensional environmental feature includes mapping the three-dimensional LiDAR point cloud data to a two-dimensional image.

In one embodiment, the M-dimensional sensor data includes (M-1)-dimensional LiDAR point cloud data indexed in accordance with time and the N-dimensional map includes (N-1)-dimensional image data indexed in accordance with time.

In one embodiment, the M-dimensional sensor data is mapped to a plurality of planes, wherein each plane of the plurality of planes corresponds to a distinct N-dimensional map.

In one embodiment, the odometry data is used to determine location coordinates of the vehicle relative to the N-dimensional map.

In one embodiment, the odometry data is used to determine a directional orientation of the vehicle relative to the N-dimensional map.

In one embodiment, the determined location coordinates and the directional orientation are transmitted to a remote server or another vehicle to provide navigation assistance to the other vehicle.

In one embodiment, the one or more sensors include a controller area network (CAN) bus of the vehicle and the odometry data is generated using the CAN bus.

In one embodiment, the one or more sensors include an inertial measurement unit (IMU) of the vehicle and the odometry data is generated using the IMU.

In one embodiment, the odometry data includes a speed, a steering angle, a longitudinal acceleration, or a lateral acceleration.

In one embodiment, the extracting of the M-dimensional environmental feature includes generating, from the M-dimensional sensor data, a plurality of pixels, wherein a number of the plurality of pixels corresponds to a number of LiDAR beams of the one or more sensors. A depth difference is analyzed between a first pixel of the plurality of pixels and neighboring pixels of the first pixel to extract the M-dimensional environmental feature.

In one embodiment, the extracting of the M-dimensional environmental feature includes generating, from the M-dimensional sensor data, a plurality of pixels. The M-dimensional environmental feature is extracted from the plurality of pixels, responsive to a depth difference between a first pixel of the plurality of pixels and neighboring pixels of the first pixel being less than a threshold.

In one embodiment, the associating of the M-dimensional environmental feature with the odometry data includes correlating or probabilistic matching of the M-dimensional environmental feature to the spatiotemporal location.

In one embodiment, the one or more sensors of the vehicle located at a second spatiotemporal location within the environment are used to generate second M-dimensional sensor data representing the environment. The second M-dimensional sensor data is associated with the second spatiotemporal location to make the second M-dimensional sensor data distinct from the M-dimensional sensor data.

In one embodiment, the generating of the N-dimensional version of the M-dimensional environmental feature includes counting instances of N-dimensional location coordinates of the M-dimensional environmental feature.

In one embodiment, the embedding of the N-dimensional version of the M-dimensional environmental feature includes responsive to a count of instances of N-dimensional location coordinates of the M-dimensional environmental feature exceeding a threshold, embedding N-dimensional location coordinates of the M-dimensional environmental feature within the N-dimensional map.

In one embodiment, the M-dimensional environmental feature represents a road segment, a construction zone, a curb, a building, a parking space located on a road segment, a highway exit or entrance ramp, or a parking lot.

In one embodiment, the M-dimensional environmental feature represents a marking on a road segment, a road sign located within the environment, a traffic signal, or a median separating two lanes.

In one embodiment, the M-dimensional environmental feature represents a vehicle, a pedestrian, or a cyclist.

In one embodiment, the M-dimensional environmental feature represents a splitting of a lane into a plurality of lanes, a merging of a plurality of lanes into a single lane, an intersection of a plurality of lanes, a roundabout including a spatial location for a vehicle to enter or exit the roundabout, or a curving of a lane along a road segment.

In one embodiment, an autonomous vehicle includes one or more computer processors and one or more non-transitory storage media storing instructions which, when executed by the one or more computer processors, cause performance of the method of any one of the claims disclosed herein.

In one embodiment, one or more non-transitory storage media store instructions which, when executed by one or more computing devices, cause performance of the method of any one of the claims disclosed herein.

In one embodiment, a method includes performing a machine-executed operation involving instructions which, when executed by one or more computing devices, cause performance of the method of any one of the claims disclosed herein, wherein the machine-executed operation is at least one of sending said instructions, receiving said instructions, storing said instructions, or executing said instructions.

In one embodiment, a vehicle includes one or more sensors configured to generate, at a spatiotemporal location within an environment within which the vehicle is located, M-dimensional sensor data representing the environment, wherein M is greater than 2. Odometry data is generated representing an operational state of the vehicle, wherein the odometry data is associated with the spatiotemporal location. One or more processors are communicatively coupled to the one or more sensors and configured to generate an N-dimensional map of the environment from the M-dimensional sensor data, wherein N is less than M and the generating of the N-dimensional map includes extracting an M-dimensional environmental feature of the spatiotemporal location from the M-dimensional sensor data. The M-dimensional environmental feature is associated with the odometry data. An N-dimensional version of the M-dimensional environmental feature is generated. The N-dimensional version of the M-dimensional environmental feature is embedded within the N-dimensional map.

These and other aspects, features, and implementations can be expressed as methods, apparatus, systems, components, program products, means or steps for performing a function, and in other ways.

These and other aspects, features, and implementations will become apparent from the following descriptions, including the claims.

### BRIEF DESCRIPTION OF THE DRAWINGS

FIG. 1 shows an example of an autonomous vehicle (AV) having autonomous capability, in accordance with one or more embodiments.
FIG. 2 illustrates an example "cloud" computing environment, in accordance with one or more embodiments.
FIG. 3 illustrates a computer system, in accordance with one or more embodiments.
FIG. 4 shows an example architecture for an AV, in accordance with one or more embodiments.
FIG. 5 shows an example of inputs and outputs that may be used by a perception module, in accordance with one or more embodiments.
FIG. 6 shows an example of a LiDAR system, in accordance with one or more embodiments.
FIG. 7 shows the LiDAR system in operation, in accordance with one or more embodiments.
FIG. 8 shows the operation of the LiDAR system in additional detail, in accordance with one or more embodiments.
FIG. 9 shows a block diagram of the relationships between inputs and outputs of a planning module, in accordance with one or more embodiments.
FIG. 10 shows a directed graph used in path planning, in accordance with one or more embodiments.
FIG. 11 shows a block diagram of the inputs and outputs of a control module, in accordance with one or more embodiments.
FIG. 12 shows a block diagram of the inputs, outputs, and components of a controller, in accordance with one or more embodiments.
FIG. 13 illustrates a block diagram of an architecture for automatic generation of a dimensionally reduced map and spatiotemporal localization for navigation of an AV, in accordance with one or more embodiments.
FIG. 14 illustrates an example environment for automatic generation of a dimensionally reduced map and spatiotemporal localization for navigation of an AV, in accordance with one or more embodiments.
FIG. 15 illustrates an example dimensionally reduced map for navigation of an AV, in accordance with one or more embodiments.
FIG. 16 illustrates a process for automatic generation of a dimensionally reduced map and spatiotemporal localization in an environment for navigation of an AV, in accordance with one or more embodiments.
FIG. 17 illustrates a process for automatic generation of a dimensionally reduced map and spatiotemporal localization in an environment for navigation of an AV, in accordance with one or more embodiments.

### DETAILED DESCRIPTION

In the following description, for the purposes of explanation, numerous specific details are set forth in order to provide a thorough understanding of the present invention. It will be apparent, however, that the present invention may be practiced without these specific details. In other instances, well-known structures and devices are shown in block diagram form in order to avoid unnecessarily obscuring the present invention.

In the drawings, specific arrangements or orderings of schematic elements, such as those representing devices, modules, instruction blocks and data elements, are shown for ease of description. However, it should be understood by those skilled in the art that the specific ordering or arrangement of the schematic elements in the drawings is not meant to imply that a particular order or sequence of processing, or separation of processes, is required. Further, the inclusion of a schematic element in a drawing is not meant to imply that such element is required in all embodiments or that the features represented by such element may not be included in or combined with other elements in some embodiments.

Further, in the drawings, where connecting elements, such as solid or dashed lines or arrows, are used to illustrate a connection, relationship, or association between or among two or more other schematic elements, the absence of any such connecting elements is not meant to imply that no connection, relationship, or association can exist. In other words, some connections, relationships, or associations between elements are not shown in the drawings so as not to obscure the disclosure. In addition, for ease of illustration, a single connecting element is used to represent multiple connections, relationships or associations between elements. For example, where a connecting element represents a communication of signals, data, or instructions, it should be understood by those skilled in the art that such element represents one or multiple signal paths (e.g., a bus), as may be needed, to affect the communication.

Reference will now be made in detail to embodiments, examples of which are illustrated in the accompanying drawings. In the following detailed description, numerous specific details are set forth in order to provide a thorough understanding of the various described embodiments. However, it will be apparent to one of ordinary skill in the art that the various described embodiments may be practiced without these specific details. In other instances, well-known methods, procedures, components, circuits, and networks have not been described in detail so as not to unnecessarily obscure aspects of the embodiments.

Several features are described hereafter that can each be used independently of one another or with any combination of other features. However, any individual feature may not address any of the problems discussed above or might only address one of the problems discussed above. Some of the problems discussed above might not be fully addressed by any of the features described herein. Although headings are provided, information related to a particular heading, but not found in the section having that heading, may also be found elsewhere in this description. Embodiments are described herein according to the following outline:
1. General Overview
2. System Overview
3. Autonomous Vehicle Architecture
4. Autonomous Vehicle Inputs
5. Autonomous Vehicle Planning
6. Autonomous Vehicle Control
7. Architecture for Automatic Generation of a Dimensionally Reduced Map
8. Environment for Automatic Generation of a Dimensionally Reduced Map
9. Example Dimensionally Reduced Map
10. Process for Automatic Generation of a Dimensionally Reduced Map

### General Overview

An autonomous vehicle (AV) navigates by acquiring information about the AV's environment and locating itself within the environment. The AV performs map generation by collecting and correlating sensor measurements into a multi-dimensional map while addressing sensor noise and uncertainty. In addition, as the AV travels within the environment, the AV addresses uncertainty in estimations of its location and directional orientation by associating the sensor measurements with a spatiotemporal location at which the AV is located. The AV uses the sensor measurements to estimate the AV's location and directional orientation relative to the map. The AV addresses sensor noise and uncertainty with respect to the map to distinguish between two or more plausible spatiotemporal locations within the map.

During navigation, the AV encounters dynamic conditions in the environment and navigates across unmapped portions of the environment. During navigation, the AV therefore generates a map of the environment and simultaneously determines the AV's location and directional orientation relative to the map. The AV estimates its trajectory and generates a map of the environment as the AV travels within the environment. To address inherent noise in the sensor measurements, the AV generates M-dimensional sensor data (e.g., three-dimensional LiDAR point cloud data) as part of the sensor measurements. In one embodiment, the AV generates odometry data using a controller area network (CAN) bus of the AV or an inertial measurement unit (IMU). An IMU is an electronic device that measures and reports the AV's specific force, angular rate, or the magnetic field surrounding the AV. The IMU uses a combination of accelerometers, gyroscopes, or magnetometers. The IMU is used to maneuver the AV. The IMU allows a GNSS receiver on the AV to work when GNSS-signals are unavailable, such as in tunnels, or when electronic interference is present. The odometry measurements include a speed, an acceleration, or a steering angle. The AV uses the odometry data to provide a uniquely identifying signature for distinguishing between different spatiotemporal locations within the environment.

In one embodiment, the AV generates a base map using the M-dimensional sensor data. In one embodiment, the M-dimensional base map is an M-dimensional LiDAR point cloud map. The AV addresses inaccuracies within the base map such as misidentified loop closures. The AV resolves the errors in the base map using the odometry data to close loops, i.e., recognize when two different spatiotemporal locations are incorrectly related and remove the relation between the two different spatiotemporal locations. Once the incorrect loop closures are removed, the base map is optimized.

The AV dimensionally reduces the base map into an N-dimensional map, wherein N is lesser than M. For example, a three-dimensional map can be reduced to a two-dimensional map. Among other benefits and advantages, it is more computationally efficient for the AV or another vehicle to use the N-dimensional map than the M-dimensional sensor data or base map. Moreover, the data storage for storing the N-dimensional map is reduced.

In one embodiment, using one or more sensors of an AV located at a spatiotemporal location within an environment, M-dimensional sensor data is generated representing the environment, wherein M is greater than 2. Using the one or more sensors, odometry data is generated representing an operational state of the AV. The odometry data is associated with the spatiotemporal location. Using one or more processors of the AV, an N-dimensional map is generated of the environment from the M-dimensional sensor data, wherein N is less than M. The generating of the N-dimensional map includes extracting an M-dimensional environmental feature of the spatiotemporal location from the M-dimensional sensor data. The M-dimensional environmental feature is associated with the odometry data. An N-dimensional version of the M-dimensional environmental feature is generated. The N-dimensional version of the M-dimensional environmental feature is embedded within the N-dimensional map.

In one embodiment, the generating of the N-dimensional version of the M-dimensional environmental feature includes identifying the M-dimensional environmental feature within the environment as marked in the M-dimensional sensor data or base map. The M-dimensional sensor data (e.g., three-dimensional point cloud data) is analyzed as an L-pixel image, wherein L is a number of LiDAR beams of the AV's sensors. For each pixel within the L-pixel image, a depth difference between the pixel and its neighboring pixels is determined. If the depth difference is smaller than a threshold, the M-dimensional environmental feature is identified. For each M-dimensional environmental feature, location coordinates of the M-dimensional environmental feature are used to allocate the M-dimensional environmental feature to a grid by counting instances of N-dimensional location coordinates of the M-dimensional environmental feature. Responsive to the count exceeding a threshold, the N-dimensional location coordinates of the M-dimensional environmental feature are embedded within the N-dimensional map.

### System Overview

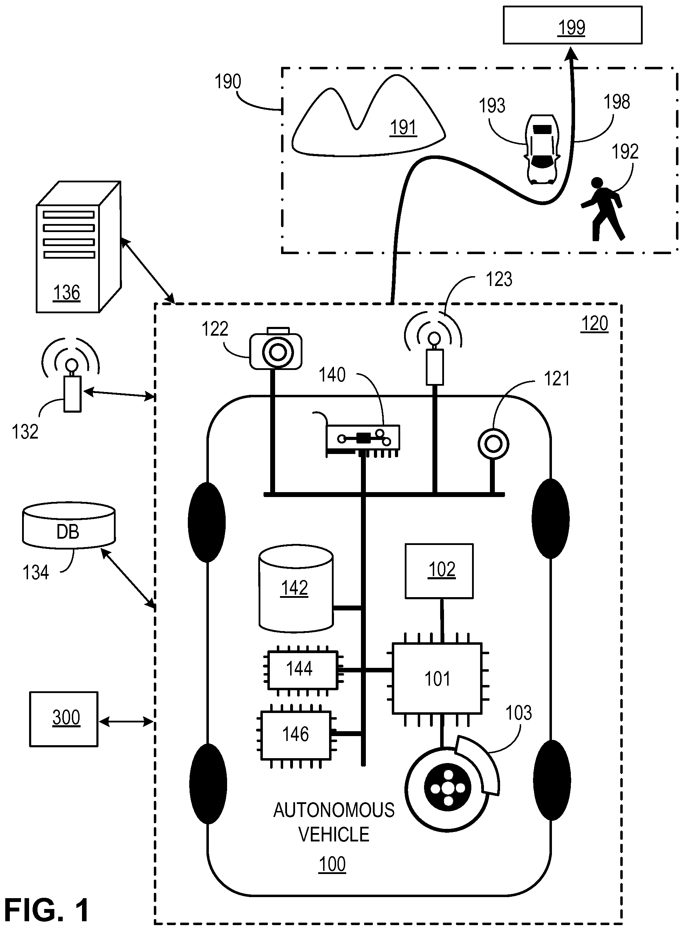

FIG. 1 shows an example of an AV 100 having autonomous capability.

As used herein, the term "autonomous capability" refers to a function, feature, or facility that enables a vehicle to be partially or fully operated without real-time human intervention, including without limitation fully autonomous vehicles, highly autonomous vehicles, and conditionally autonomous vehicles.

As used herein, an AV is a vehicle that possesses autonomous capability.

As used herein, "vehicle" includes means of transportation of goods or people. For example, cars, buses, trains, airplanes, drones, trucks, boats, ships, submersibles, dirigibles, etc. A driverless car is an example of a vehicle.

As used herein, a "road" is a physical area that can be traversed by a vehicle, and may correspond to a named thoroughfare (e.g., city street, interstate freeway, etc.) or may correspond to an unnamed thoroughfare (e.g., a driveway in a house or office building, a section of a parking lot, a section of a vacant lot, a dirt path in a rural area, etc.).

As used herein, a "lane" is a portion of a road that can be traversed by a vehicle, and may correspond to most or all of the space between lane markings, or may correspond to only some (e.g., less than 50%) of the space between lane markings. For example, a road having lane markings spaced far apart might accommodate two or more vehicles between the markings, such that one vehicle can pass the other without traversing the lane markings, and thus could be interpreted as having two lanes between the lane markings. A lane may also be independent of the markings. For example, if another vehicle is temporarily parked ahead of a navigating vehicle and is occupying a portion of a marked lane in which the navigating vehicle is driving, a new "lane" may be defined to be the remaining portion of the marked lane and a portion of an adjacent marked lane.

As used herein, "trajectory" refers to a path or route to navigate an AV from a first spatiotemporal location to second spatiotemporal location. In an embodiment, the first spatiotemporal location is referred to as the initial or starting location and the second spatiotemporal location is referred to as the destination, final location, goal, goal position, or goal location. In some examples, a trajectory is made up of one or more segments (e.g., sections of road) and each segment is made up of one or more blocks (e.g., portions of a lane or intersection). In an embodiment, the spatiotemporal locations correspond to real world locations. For example, the spatiotemporal locations are pick up or drop-off locations to pick up or drop-off persons or goods.

As used herein, "sensor(s)" includes one or more hardware components that detect information about the environment surrounding the sensor. Some of the hardware components can include sensing components (e.g., image sensors, biometric sensors), transmitting and/or receiving components (e.g., laser or radio frequency wave transmitters and receivers), electronic components such as analog-to-digital converters, a data storage device (such as a RAM and/or a nonvolatile storage), software or firmware components and data processing components such as an ASIC (application-specific integrated circuit), a microprocessor and/or a microcontroller.

As used herein, a "scene description" is a data structure (e.g., list) or data stream that includes one or more classified or labeled objects detected by one or more sensors on the AV vehicle or provided by a source external to the AV.

As used herein, a "road" is a physical area that can be traversed by a vehicle, and may correspond to a named thoroughfare (e.g., city street, interstate freeway, etc.) or may correspond to an unnamed thoroughfare (e.g., a driveway in a house or office building, a section of a parking lot, a section of a vacant lot, a dirt path in a rural area, etc.). Because some vehicles (e.g., 4-wheel-drive pickup trucks, sport utility vehicles, etc.) are capable of traversing a variety of physical areas not specifically adapted for vehicle travel, a "road" may be a physical area not formally defined as a thoroughfare by any municipality or other governmental or administrative body.

As used herein, a "lane" is a portion of a road that can be traversed by a vehicle, and may correspond to most or all of the space between lane markings, or may correspond to only some (e.g., less than 50%) of the space between lane markings. For example, a road having lane markings spaced far apart might accommodate two or more vehicles between the markings, such that one vehicle can pass the other without traversing the lane markings, and thus could be interpreted as having a lane narrower than the space between the lane markings, or having two lanes between the lane markings. A lane could also be interpreted in the absence of lane markings. For example, a lane may be defined based on physical features of an environment, e.g., rocks and trees along a thoroughfare in a rural area.

"One or more" includes a function being performed by one element, a function being performed by more than one element, e.g., in a distributed fashion, several functions being performed by one element, several functions being performed by several elements, or any combination of the above.

It will also be understood that, although the terms first, second, etc. are, in some instances, used herein to describe various elements, these elements should not be limited by these terms. These terms are only used to distinguish one element from another. For example, a first contact could be termed a second contact, and, similarly, a second contact could be termed a first contact, without departing from the scope of the various described embodiments. The first contact and the second contact are both contacts, but they are not the same contact.

The terminology used in the description of the various described embodiments herein is for the purpose of describing particular embodiments only and is not intended to be limiting. As used in the description of the various described embodiments and the appended claims, the singular forms "a," "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this description, specify the presence of stated features, integers, steps, operations, elements, and/or components, but do not preclude the presence or addition of one or more other features, integers, steps, operations, elements, components, and/or groups thereof.

As used herein, the term "if' is, optionally, construed to mean "when" or "upon" or "in response to determining" or "in response to detecting," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]," depending on the context.

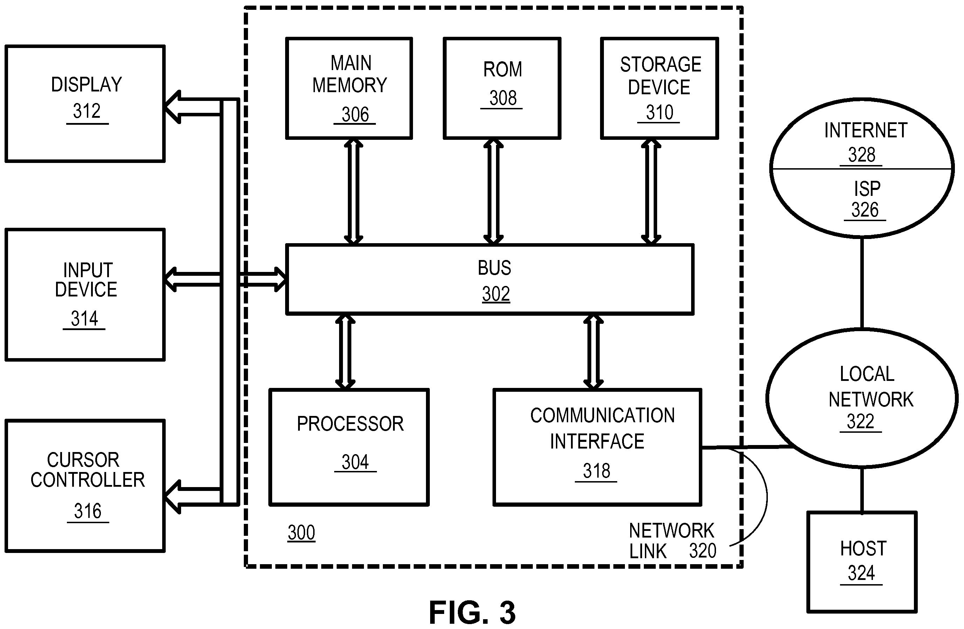

As used herein, an AV system refers to the AV along with the array of hardware, software, stored data, and data generated in real-time that supports the operation of the AV. In an embodiment, the AV system is incorporated within the AV. In an embodiment, the AV system is spread across several locations. For example, some of the software of the AV system is implemented on a cloud computing environment similar to cloud computing environment 300 described below with respect to FIG. 3.

In general, this document describes technologies applicable to any vehicles that have one or more autonomous capabilities including fully autonomous vehicles, highly autonomous vehicles, and conditionally autonomous vehicles, such as so-called Level 5, Level 4 and Level 3 vehicles, respectively (see SAE International's standard J3016: Taxonomy and Definitions for Terms Related to On-Road Motor Vehicle Automated Driving Systems, which is incorporated by reference in its entirety, for more details on the classification of levels of autonomy in vehicles). The technologies described in this document are also applicable to partially autonomous vehicles and driver assisted vehicles, such as so-called Level 2 and Level 1 vehicles (see SAE International's standard J3016: Taxonomy and Definitions for Terms Related to On-Road Motor Vehicle Automated Driving Systems). In an embodiment, one or more of the Level 1, 2, 3, 4 and 5 vehicle systems may automate certain vehicle operations (e.g., steering, braking, and using maps) under certain operating conditions based on processing of sensor inputs. The technologies described in this document can benefit vehicles in any levels, ranging from fully autonomous vehicles to human-operated vehicles.

Referring to FIG. 1, an AV system 120 operates the AV 100 autonomously or semi-autonomously along a trajectory 198 through an environment 190 to a destination 199 (sometimes referred to as a final location) while avoiding objects (e.g., natural obstructions 191, vehicles 193, pedestrians 192, cyclists, and other obstacles) and obeying rules of the road (e.g., rules of operation or driving preferences).

In an embodiment, the AV system 120 includes devices 101 that are instrumented to receive and act on operational commands from the computer processors 146. In an embodiment, computing processors 146 are similar to the processor 304 described below in reference to FIG. 3. Examples of devices 101 include a steering control 102, brakes 103, gears, accelerator pedal or other acceleration control mechanisms, windshield wipers, side-door locks, window controls, and turn-indicators.

In an embodiment, the AV system 120 includes sensors 121 for measuring or inferring properties of state or condition of the AV 100, such as the AV's position, linear and angular velocity and acceleration, and heading (e.g., an orientation of the leading end of AV 100). Example of sensors 121 are Global Navigation Satellite System (GNSS) sensors, IMUs that measure both vehicle linear accelerations and angular rates, wheel speed sensors for measuring or estimating wheel slip ratios, wheel brake pressure or braking torque sensors, engine torque or wheel torque sensors, and steering angle and angular rate sensors.

In an embodiment, the sensors 121 also include sensors for sensing or measuring properties of the AV's environment. For example, monocular or stereo video cameras 122 in the visible light, infrared or thermal (or both) spectra, LiDAR 123, RADAR, ultrasonic sensors, time-of-flight (TOF) depth sensors, speed sensors, temperature sensors, humidity sensors, and precipitation sensors.

In an embodiment, the AV system 120 includes a data storage unit 142 and memory 144 for storing machine instructions associated with computer processors 146 or data collected by sensors 121. In an embodiment, the data storage unit 142 is similar to the ROM 308 or storage device 310 described below in relation to FIG. 3. In an embodiment, memory 144 is similar to the main memory 306 described below. In an embodiment, the data storage unit 142 and memory 144 store historical, real-time, and/or predictive information about the environment 190. In an embodiment, the stored information includes maps, driving performance, traffic congestion updates or weather conditions. In an embodiment, data relating to the environment 190 is transmitted to the AV 100 via a communications channel from a remotely located database 134.

In an embodiment, the AV system 120 includes communications devices 140 for communicating measured or inferred properties of other vehicles' states and conditions, such as positions, linear and angular velocities, linear and angular accelerations, and linear and angular headings to the AV 100. These devices include Vehicle-to-Vehicle (V2V) and Vehicle-to-Infrastructure (V2I) communication devices and devices for wireless communications over point-to-point or ad hoc networks or both. In an embodiment, the communications devices 140 communicate across the electromagnetic spectrum (including radio and optical communications) or other media (e.g., air and acoustic media). A combination of Vehicle-to-Vehicle (V2V) Vehicle-to-Infrastructure (V2I) communication (and, in some embodiments, one or more other types of communication) is sometimes referred to as Vehicle-to-Everything (V2X) communication. V2X communication typically conforms to one or more communications standards for communication with, between, and among autonomous vehicles.

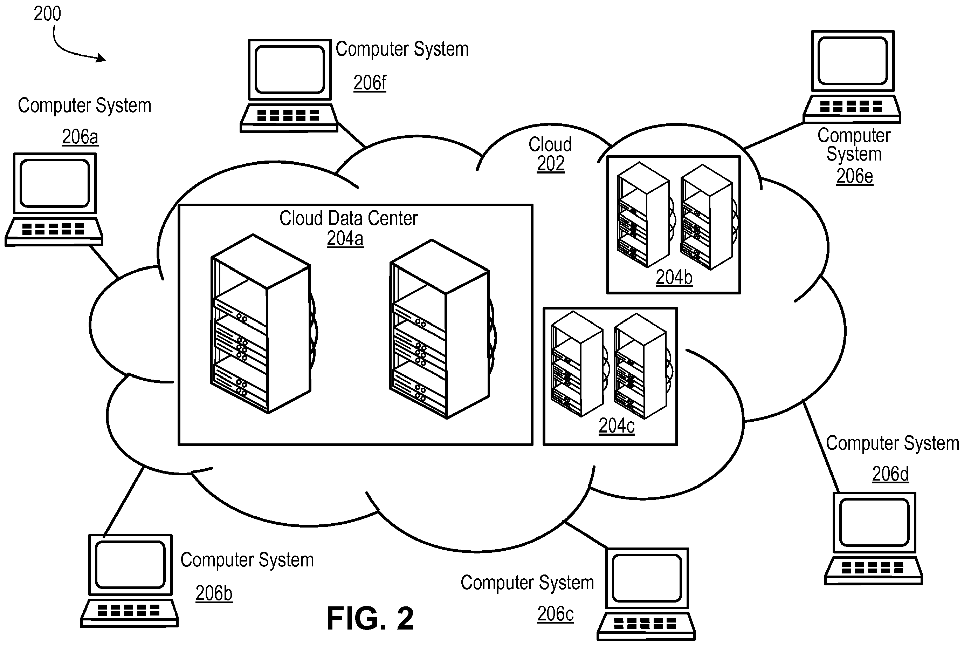

In an embodiment, the communication devices 140 include communication interfaces. For example, wired, wireless, WiMAX, Wi-Fi, Bluetooth, satellite, cellular, optical, near field, infrared, or radio interfaces. The communication interfaces transmit data from a remotely located database 134 to AV system 120. In an embodiment, the remotely located database 134 is embedded in a cloud computing environment 200 as described in FIG. 2. The communication interfaces 140 transmit data collected from sensors 121 or other data related to the operation of AV 100 to the remotely located database 134. In an embodiment, communication interfaces 140 transmit information that relates to teleoperations to the AV 100. In some embodiments, the AV 100 communicates with other remote (e.g., "cloud") servers 136.

In an embodiment, the remotely located database 134 also stores and transmits digital data (e.g., storing data such as road and street locations). Such data is stored on the memory 144 on the AV 100, or transmitted to the AV 100 via a communications channel from the remotely located database 134.

In an embodiment, the remotely located database 134 stores and transmits historical information about driving properties (e.g., speed and acceleration profiles) of vehicles that have previously traveled along trajectory 198 at similar times of day. In one implementation, such data may be stored on the memory 144 on the AV 100, or transmitted to the AV 100 via a communications channel from the remotely located database 134.

Computing devices 146 located on the AV 100 algorithmically generate control actions based on both real-time sensor data and prior information, allowing the AV system 120 to execute its autonomous driving capabilities.

In an embodiment, the AV system 120 includes computer peripherals 132 coupled to computing devices 146 for providing information and alerts to, and receiving input from, a user (e.g., an occupant or a remote user) of the AV 100. In an embodiment, peripherals 132 are similar to the display 312, input device 314, and cursor controller 316 discussed below in reference to FIG. 3. The coupling is wireless or wired. Any two or more of the interface devices may be integrated into a single device.

### Cloud Computing Environment

FIG. 2 illustrates an example "cloud" computing environment. Cloud computing is a model of service delivery for enabling convenient, on-demand network access to a shared pool of configurable computing resources (e.g. networks, network bandwidth, servers, processing, memory, storage, applications, virtual machines, and services). In typical cloud computing systems, one or more large cloud data centers house the machines used to deliver the services provided by the cloud. Referring now to FIG. 2, the cloud computing environment 200 includes cloud data centers 204a, 204b, and 204c that are interconnected through the cloud 202. Data centers 204a, 204b, and 204c provide cloud computing services to computer systems 206a, 206b, 206c, 206d, 206e, and 206f connected to cloud 202.

The cloud computing environment 200 includes one or more cloud data centers. In general, a cloud data center, for example the cloud data center 204a shown in FIG. 2, refers to the physical arrangement of servers that make up a cloud, for example the cloud 202 shown in FIG. 2, or a particular portion of a cloud. For example, servers are physically arranged in the cloud datacenter into rooms, groups, rows, and racks. A cloud datacenter has one or more zones, which include one or more rooms of servers. Each room has one or more rows of servers, and each row includes one or more racks. Each rack includes one or more individual server nodes. In some implementation, servers in zones, rooms, racks, and/or rows are arranged into groups based on physical infrastructure requirements of the datacenter facility, which include power, energy, thermal, heat, and/or other requirements. In an embodiment, the server nodes are similar to the computer system described in FIG. 3. The data center 204a has many computing systems distributed through many racks.

The cloud 202 includes cloud data centers 204a, 204b, and 204c along with the network and networking resources (for example, networking equipment, nodes, routers, switches, and networking cables) that interconnect the cloud data centers 204a, 204b, and 204c and help facilitate the computing systems' 206a-f access to cloud computing services. In an embodiment, the network represents any combination of one or more local networks, wide area networks, or internetworks coupled using wired or wireless links deployed using terrestrial or satellite connections. Data exchanged over the network, is transferred using any number of network layer protocols, such as Internet Protocol (IP), Multiprotocol Label Switching (MPLS), Asynchronous Transfer Mode (ATM), Frame Relay, etc. Furthermore, in embodiments where the network represents a combination of multiple sub-networks, different network layer protocols are used at each of the underlying sub-networks. In some embodiments, the network represents one or more interconnected internetworks, such as the public Internet.

The computing systems 206a-f or cloud computing services consumers are connected to the cloud 202 through network links and network adapters. In an embodiment, the computing systems 206a-f are implemented as various computing devices, for example servers, desktops, laptops, tablet, smartphones, Internet of Things (IoT) devices, autonomous vehicles (including, cars, drones, shuttles, trains, buses, etc.) and consumer electronics. In an embodiment, the computing systems 206a-f are implemented in or as a part of other systems.

### Computer System

FIG. 3 illustrates a computer system 300. In an implementation, the computer system 300 is a special purpose computing device. The special-purpose computing device is hard-wired to perform the techniques or includes digital electronic devices such as one or more application-specific integrated circuits (ASICs) or field programmable gate arrays (FPGAs) that are persistently programmed to perform the techniques, or may include one or more general purpose hardware processors programmed to perform the techniques pursuant to program instructions in firmware, memory, other storage, or a combination. Such special-purpose computing devices may also combine custom hard-wired logic, ASICs, or FPGAs with custom programming to accomplish the techniques. In various embodiments, the special-purpose computing devices are desktop computer systems, portable computer systems, handheld devices, network devices or any other device that incorporates hard-wired and/or program logic to implement the techniques.

In an embodiment, the computer system 300 includes a bus 302 or other communication mechanism for communicating information, and a hardware processor 304 coupled with a bus 302 for processing information. The hardware processor 304 is, for example, a general-purpose microprocessor. The computer system 300 also includes a main memory 306, such as a random-access memory (RAM) or other dynamic storage device, coupled to the bus 302 for storing information and instructions to be executed by processor 304. In one implementation, the main memory 306 is used for storing temporary variables or other intermediate information during execution of instructions to be executed by the processor 304. Such instructions, when stored in non-transitory storage media accessible to the processor 304, render the computer system 300 into a special-purpose machine that is customized to perform the operations specified in the instructions.

In an embodiment, the computer system 300 further includes a read only memory (ROM) 308 or other static storage device coupled to the bus 302 for storing static information and instructions for the processor 304. A storage device 310, such as a magnetic disk, optical disk, solid-state drive, or three-dimensional cross point memory is provided and coupled to the bus 302 for storing information and instructions.

In an embodiment, the computer system 300 is coupled via the bus 302 to a display 312, such as a cathode ray tube (CRT), a liquid crystal display (LCD), plasma display, light emitting diode (LED) display, or an organic light emitting diode (OLED) display for displaying information to a computer user. An input device 314, including alphanumeric and other keys, is coupled to bus 302 for communicating information and command selections to the processor 304. Another type of user input device is a cursor controller 316, such as a mouse, a trackball, a touch-enabled display, or cursor direction keys for communicating direction information and command selections to the processor 304 and for controlling cursor movement on the display 312. This input device typically has two degrees of freedom in two axes, a first axis (e.g., x-axis) and a second axis (e.g., y-axis), that allows the device to specify positions in a plane.

According to one embodiment, the techniques herein are performed by the computer system 300 in response to the processor 304 executing one or more sequences of one or more instructions contained in the main memory 306. Such instructions are read into the main memory 306 from another storage medium, such as the storage device 310. Execution of the sequences of instructions contained in the main memory 306 causes the processor 304 to perform the process steps described herein. In alternative embodiments, hard-wired circuitry is used in place of or in combination with software instructions.

The term "storage media" as used herein refers to any non-transitory media that store data and/or instructions that cause a machine to operate in a specific fashion. Such storage media includes non-volatile media and/or volatile media. Non-volatile media includes, for example, optical disks, magnetic disks, solid-state drives, or three-dimensional cross point memory, such as the storage device 310. Volatile media includes dynamic memory, such as the main memory 306. Common forms of storage media include, for example, a floppy disk, a flexible disk, hard disk, solid-state drive, magnetic tape, or any other magnetic data storage medium, a CD-ROM, any other optical data storage medium, any physical medium with patterns of holes, a RAM, a PROM, and EPROM, a FLASH-EPROM, NV-RAM, or any other memory chip or cartridge.

Storage media is distinct from but may be used in conjunction with transmission media. Transmission media participates in transferring information between storage media. For example, transmission media includes coaxial cables, copper wire and fiber optics, including the wires that include the bus 302. Transmission media can also take the form of acoustic or light waves, such as those generated during radio-wave and infrared data communications.

In an embodiment, various forms of media are involved in carrying one or more sequences of one or more instructions to the processor 304 for execution. For example, the instructions are initially carried on a magnetic disk or solid-state drive of a remote computer. The remote computer loads the instructions into its dynamic memory and send the instructions over a telephone line using a modem. A modem local to the computer system 300 receives the data on the telephone line and use an infrared transmitter to convert the data to an infrared signal. An infrared detector receives the data carried in the infrared signal and appropriate circuitry places the data on the bus 302. The bus 302 carries the data to the main memory 306, from which processor 304 retrieves and executes the instructions. The instructions received by the main memory 306 may optionally be stored on the storage device 310 either before or after execution by processor 304.

The computer system 300 also includes a communication interface 318 coupled to the bus 302. The communication interface 318 provides a two-way data communication coupling to a network link 320 that is connected to a local network 322. For example, the communication interface 318 is an integrated service digital network (ISDN) card, cable modem, satellite modem, or a modem to provide a data communication connection to a corresponding type of telephone line. As another example, the communication interface 318 is a local area network (LAN) card to provide a data communication connection to a compatible LAN. In some implementations, wireless links are also implemented. In any such implementation, the communication interface 318 sends and receives electrical, electromagnetic, or optical signals that carry digital data streams representing various types of information.

The network link 320 typically provides data communication through one or more networks to other data devices. For example, the network link 320 provides a connection through the local network 322 to a host computer 324 or to a cloud data center or equipment operated by an Internet Service Provider (ISP) 326. The ISP 326 in turn provides data communication services through the world-wide packet data communication network now commonly referred to as the "Internet" 328. The local network 322 and Internet 328 both use electrical, electromagnetic or optical signals that carry digital data streams. The signals through the various networks and the signals on the network link 320 and through the communication interface 318, which carry the digital data to and from the computer system 300, are example forms of transmission media. In an embodiment, the network 320 contains the cloud 202 or a part of the cloud 202 described above.

The computer system 300 sends messages and receives data, including program code, through the network(s), the network link 320, and the communication interface 318. In an embodiment, the computer system 300 receives code for processing. The received code is executed by the processor 304 as it is received, and/or stored in storage device 310, or other non-volatile storage for later execution.

### Autonomous Vehicle Architecture

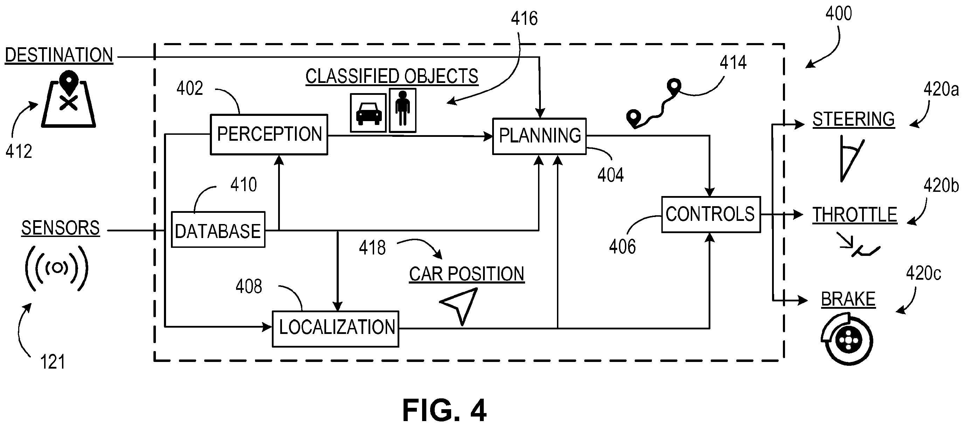

FIG. 4 shows an example architecture 400 for an autonomous vehicle (e.g., the AV 100 shown in FIG. 1). The architecture 400 includes a perception module 402 (sometimes referred to as a perception circuit), a planning module 404 (sometimes referred to as a planning circuit), a control module 406 (sometimes referred to as a control circuit), a localization module 408 (sometimes referred to as a localization circuit), and a database module 410 (sometimes referred to as a database circuit). Each module plays a role in the operation of the AV 100. Together, the modules 402, 404, 406, 408, and 410 may be part of the AV system 120 shown in FIG. 1. In some embodiments, any of the modules 402, 404, 406, 408, and 410 is a combination of computer software (e.g., executable code stored on a computer-readable medium) and computer hardware (e.g., one or more microprocessors, microcontrollers, application-specific integrated circuits [ASICs]), hardware memory devices, other types of integrated circuits, other types of computer hardware, or a combination of any or all of these things).

In use, the planning module 404 receives data representing a destination 412 and determines data representing a trajectory 414 (sometimes referred to as a route) that can be traveled by the AV 100 to reach (e.g., arrive at) the destination 412. In order for the planning module 404 to determine the data representing the trajectory 414, the planning module 404 receives data from the perception module 402, the localization module 408, and the database module 410.

The perception module 402 identifies nearby physical objects using one or more sensors 121, e.g., as also shown in FIG. 1. The objects are classified (e.g., grouped into types such as pedestrian, bicycle, automobile, traffic sign, etc.) and a scene description including the classified objects 416 is provided to the planning module 404.

The planning module 404 also receives data representing the AV position 418 from the localization module 408. The localization module 408 determines the AV position by using data from the sensors 121 and data from the database module 410 (e.g., a geographic data) to calculate a position. For example, the localization module 408 uses data from a GNSS (Global Navigation Satellite System) sensor and geographic data to calculate a longitude and latitude of the AV. In an embodiment, data used by the localization module 408 includes high-precision maps of the roadway geometric properties, maps describing road network connectivity properties, maps describing roadway physical properties (such as traffic speed, traffic volume, the number of vehicular and cyclist traffic lanes, lane width, lane traffic directions, or lane marker types and locations, or combinations of them), and maps describing the spatial locations of road features such as crosswalks, traffic signs or other travel signals of various types.

The control module 406 receives the data representing the trajectory 414 and the data representing the AV position 418 and operates the control functions 420a-c (e.g., steering, throttling, braking, ignition) of the AV in a manner that will cause the AV 100 to travel the trajectory 414 to the destination 412. For example, if the trajectory 414 includes a left turn, the control module 406 will operate the control functions 420a-c in a manner such that the steering angle of the steering function will cause the AV 100 to turn left and the throttling and braking will cause the AV 100 to pause and wait for passing pedestrians or vehicles before the turn is made.

### Autonomous Vehicle Inputs

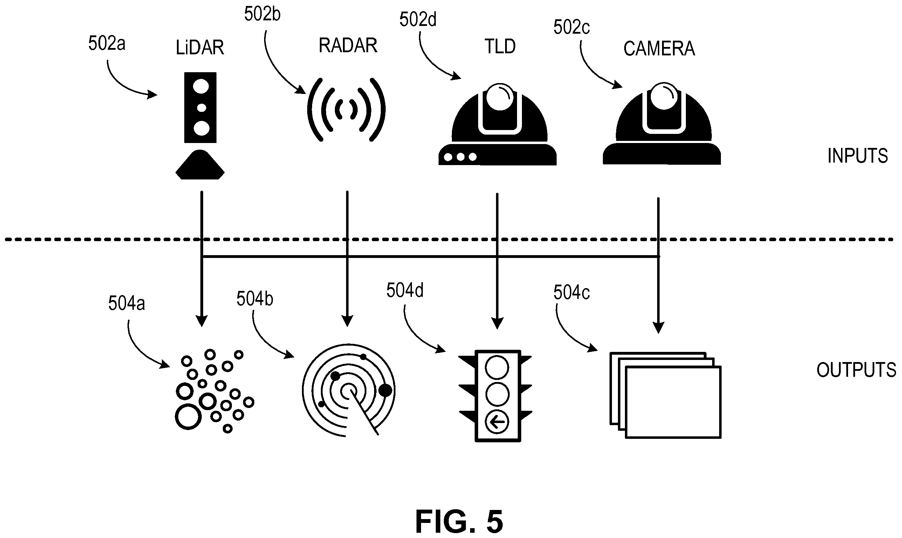

FIG. 5 shows an example of inputs 502a-d (e.g., sensors 121 shown in FIG. 1) and outputs 504a-d (e.g., sensor data) that is used by the perception module 402 (FIG. 4). One input 502a is a LiDAR (Light Detection and Ranging) system (e.g., LiDAR 123 shown in FIG. 1). LiDAR is a technology that uses light (e.g., bursts of light such as infrared light) to obtain data about physical objects in its line of sight. A LiDAR system produces LiDAR data as output 504a. For example, LiDAR data is collections of 3D or 2D points (also known as a point clouds) that are used to construct a representation of the environment 190.

Another input 502b is a RADAR system. RADAR is a technology that uses radio waves to obtain data about nearby physical objects. RADARs can obtain data about objects not within the line of sight of a LiDAR system. A RADAR system 502b produces RADAR data as output 504b. For example, RADAR data are one or more radio frequency electromagnetic signals that are used to construct a representation of the environment 190.

Another input 502c is a camera system. A camera system uses one or more cameras (e.g., digital cameras using a light sensor such as a charge-coupled device [CCD]) to obtain information about nearby physical objects. A camera system produces camera data as output 504c. Camera data often takes the form of image data (e.g., data in an image data format such as RAW, JPEG, PNG, etc.). In some examples, the camera system has multiple independent cameras, e.g., for the purpose of stereopsis (stereo vision), which enables the camera system to perceive depth. Although the objects perceived by the camera system are described here as "nearby," this is relative to the AV. In use, the camera system may be configured to "see" objects far, e.g., up to a kilometer or more ahead of the AV. Accordingly, the camera system may have features such as sensors and lenses that are optimized for perceiving objects that are far away.

Another input 502d is a traffic light detection (TLD) system. A TLD system uses one or more cameras to obtain information about traffic lights, street signs, and other physical objects that provide visual navigation information. A TLD system produces TLD data as output 504d. TLD data often takes the form of image data (e.g., data in an image data format such as RAW, JPEG, PNG, etc.). A TLD system differs from a system incorporating a camera in that a TLD system uses a camera with a wide field of view (e.g., using a wide-angle lens or a fish-eye lens) in order to obtain information about as many physical objects providing visual navigation information as possible, so that the AV 100 has access to all relevant navigation information provided by these objects. For example, the viewing angle of the TLD system may be about 120 degrees or more.

In some embodiments, outputs 504a-d are combined using a sensor fusion technique. Thus, either the individual outputs 504a-d are provided to other systems of the AV 100 (e.g., provided to a planning module 404 as shown in FIG. 4), or the combined output can be provided to the other systems, either in the form of a single combined output or multiple combined outputs of the same type (e.g., using the same combination technique or combining the same outputs or both) or different types type (e.g., using different respective combination techniques or combining different respective outputs or both). In some embodiments, an early fusion technique is used. An early fusion technique is characterized by combining outputs before one or more data processing steps are applied to the combined output. In some embodiments, a late fusion technique is used. A late fusion technique is characterized by combining outputs after one or more data processing steps are applied to the individual outputs.

### Example of a LiDAR System

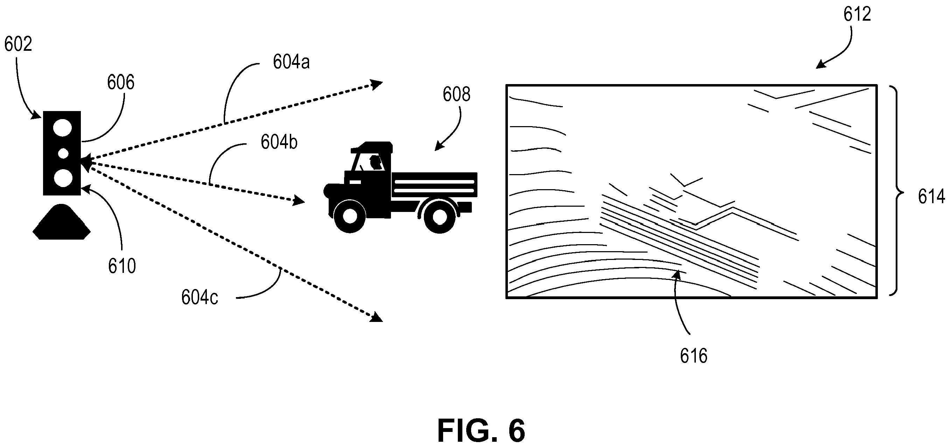

FIG. 6 shows an example of a LiDAR system 602 (e.g., the input 502a shown in FIG. 5). The LiDAR system 602 emits light 604a-c from a light emitter 606 (e.g., a laser transmitter). Light emitted by a LiDAR system is typically not in the visible spectrum; for example, infrared light is often used. Some of the light 604b emitted encounters a physical object 608 (e.g., a vehicle) and reflects back to the LiDAR system 602. (Light emitted from a LiDAR system typically does not penetrate physical objects, e.g., physical objects in solid form.) The LiDAR system 602 also has one or more light detectors 610, which detect the reflected light. In an embodiment, one or more data processing systems associated with the LiDAR system generates an image 612 representing the field of view 614 of the LiDAR system. The image 612 includes information that represents the boundaries 616 of a physical object 608. In this way, the image 612 is used to determine the boundaries 616 of one or more physical objects near an AV.

### LiDAR System in Operation

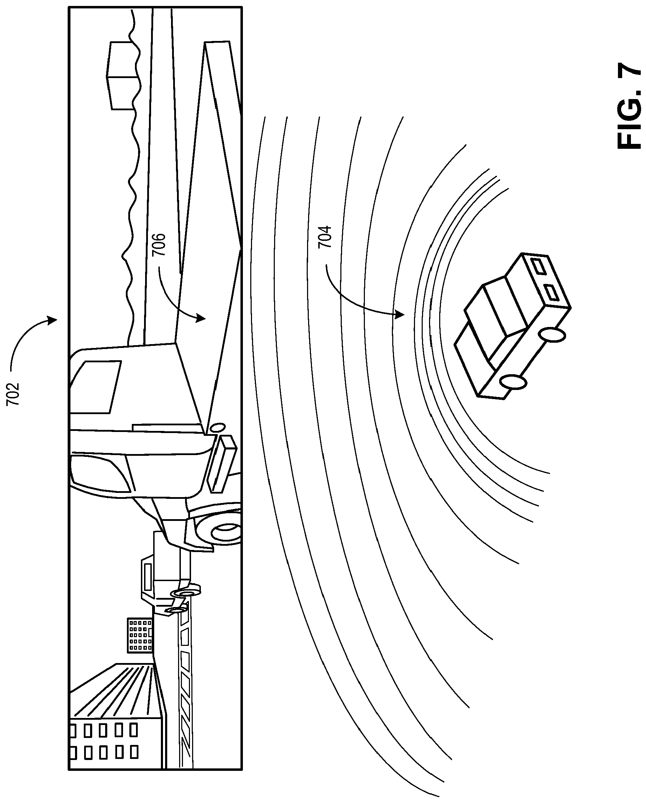

FIG. 7 shows the LiDAR system 602 in operation. In the scenario shown in this figure, the AV 100 receives both camera system output 504c in the form of an image 702 and LiDAR system output 504a in the form of LiDAR data points 704. In use, the data processing systems of the AV 100 compares the image 702 to the data points 704. In particular, a physical object 706 identified in the image 702 is also identified among the data points 704. In this way, the AV 100 perceives the boundaries of the physical object based on the contour and density of the data points 704.

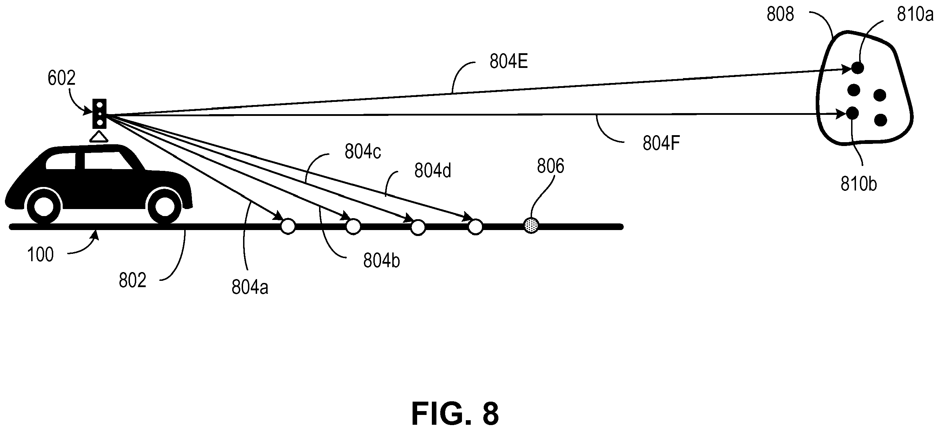

FIG. 8 shows the operation of the LiDAR system 602 in additional detail. As described above, the AV 100 detects the boundary of a physical object based on characteristics of the data points detected by the LiDAR system 602. As shown in FIG. 8, a flat object, such as the ground 802, will reflect light 804a-d emitted from a LiDAR system 602 in a consistent manner. Put another way, because the LiDAR system 602 emits light using consistent spacing, the ground 802 will reflect light back to the LiDAR system 602 with the same consistent spacing. As the AV 100 travels over the ground 802, the LiDAR system 602 will continue to detect light reflected by the next valid ground point 806 if nothing is obstructing the road. However, if an object 808 obstructs the road, light 804e-f emitted by the LiDAR system 602 will be reflected from points 810a-b in a manner inconsistent with the expected consistent manner. From this information, the AV 100 can determine that the object 808 is present.

### Path Planning

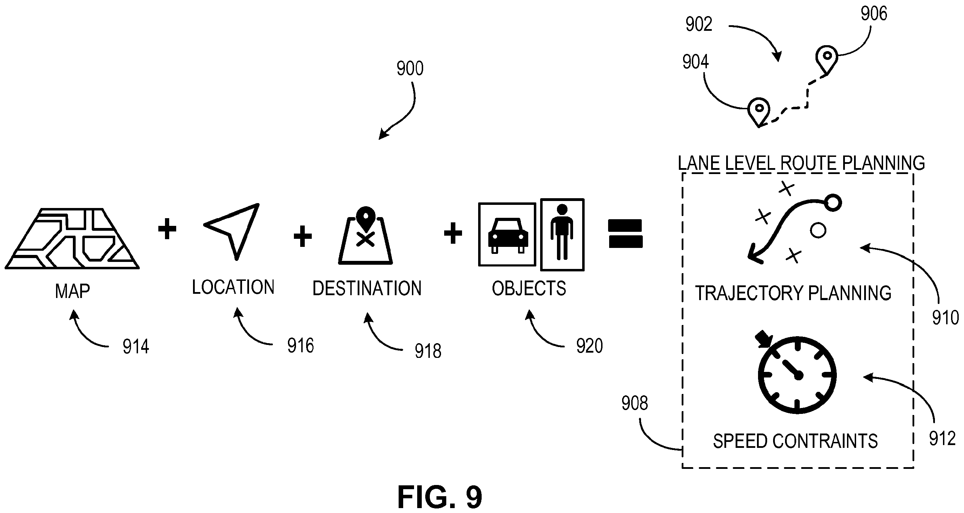

FIG. 9 shows a block diagram 900 of the relationships between inputs and outputs of a planning module 404 (e.g., as shown in FIG. 4). In general, the output of a planning module 404 is a route 902 from a start point 904 (e.g., source location or initial location), and an end point 906 (e.g., destination or final location). The route 902 is typically defined by one or more segments. For example, a segment is a distance to be traveled over at least a portion of a street, road, highway, driveway, or other physical area appropriate for automobile travel. In some examples, e.g., if the AV 100 is an off-road capable vehicle such as a four-wheel-drive (4WD) or all-wheel-drive (AWD) car, SUV, pick-up truck, or the like, the route 902 includes "off-road" segments such as unpaved paths or open fields.

In addition to the route 902, a planning module also outputs lane-level route planning data 908. The lane-level route planning data 908 is used to traverse segments of the route 902 based on conditions of the segment at a particular time. For example, if the route 902 includes a multi-lane highway, the lane-level route planning data 908 includes trajectory planning data 910 that the AV 100 can use to choose a lane among the multiple lanes, e.g., based on whether an exit is approaching, whether one or more of the lanes have other vehicles, or other factors that vary over the course of a few minutes or less. Similarly, in some implementations, the lane-level route planning data 908 includes speed constraints 912 specific to a segment of the route 902. For example, if the segment includes pedestrians or un-expected traffic, the speed constraints 912 may limit the AV 100 to a travel speed slower than an expected speed, e.g., a speed based on speed limit data for the segment.

In an embodiment, the inputs to the planning module 404 include database data 914 (e.g., from the database module 410 shown in FIG. 4), current location data 916 (e.g., the AV position 418 shown in FIG. 4), destination data 918 (e.g., for the destination 412 shown in FIG. 4), and object data 920 (e.g., the classified objects 416 as perceived by the perception module 402 as shown in FIG. 4). In some embodiments, the database data 914 includes rules used in planning. Rules are specified using a formal language, e.g., using Boolean logic. In any given situation encountered by the AV 100, at least some of the rules will apply to the situation. A rule applies to a given situation if the rule has conditions that are met based on information available to the AV 100, e.g., information about the surrounding environment. Rules can have priority. For example, a rule that says, "if the road is a freeway, move to the leftmost lane" can have a lower priority than "if the exit is approaching within a mile, move to the rightmost lane."

### Path Planning

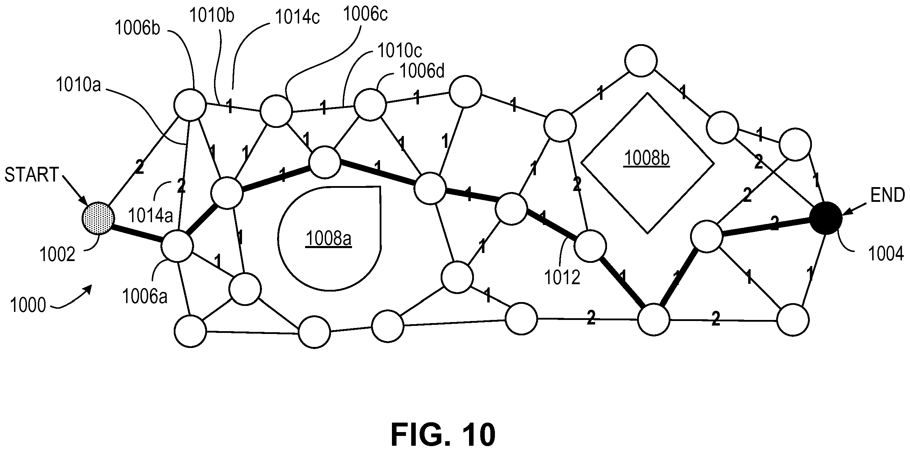

FIG. 10 shows a directed graph 1000 used in path planning, e.g., by the planning module 404 (FIG. 4). In general, a directed graph 1000 like the one shown in FIG. 10 is used to determine a path between any start point 1002 and end point 1004. In real-world terms, the distance separating the start point 1002 and end point 1004 may be relatively large (e.g, in two different metropolitan areas) or may be relatively small (e.g., two intersections abutting a city block or two lanes of a multi-lane road).

In an embodiment, the directed graph 1000 has nodes 1006a-d representing different locations between the start point 1002 and the end point 1004 that could be occupied by an AV 100. In some examples, e.g., when the start point 1002 and end point 1004 represent different metropolitan areas, the nodes 1006a-d represent segments of roads. In some examples, e.g., when the start point 1002 and the end point 1004 represent different locations on the same road, the nodes 1006a-d represent different positions on that road. In this way, the directed graph 1000 includes information at varying levels of granularity. In an embodiment, a directed graph having high granularity is also a subgraph of another directed graph having a larger scale. For example, a directed graph in which the start point 1002 and the end point 1004 are far away (e.g., many miles apart) has most of its information at a low granularity and is based on stored data, but also includes some high granularity information for the portion of the graph that represents physical locations in the field of view of the AV 100.

The nodes 1006a-d are distinct from objects 1008a-b which cannot overlap with a node. In an embodiment, when granularity is low, the objects 1008a-b represent regions that cannot be traversed by automobile, e.g., areas that have no streets or roads. When granularity is high, the objects 1008a-b represent physical objects in the field of view of the AV 100, e.g., other automobiles, pedestrians, or other entities with which the AV 100 cannot share physical space. In an embodiment, some or all of the objects 1008a-b are a static objects (e.g., an object that does not change position such as a street lamp or utility pole) or dynamic objects (e.g., an object that is capable of changing position such as a pedestrian or other car).

The nodes 1006a-d are connected by edges 1010a-c. If two nodes 1006a-b are connected by an edge 1010a, it is possible for an AV 100 to travel between one node 1006a and the other node 1006b, e.g., without having to travel to an intermediate node before arriving at the other node 1006b. (When we refer to an AV 100 traveling between nodes, we mean that the AV 100 travels between the two physical positions represented by the respective nodes.) The edges 1010a-c are often bidirectional, in the sense that an AV 100 travels from a first node to a second node, or from the second node to the first node. In an embodiment, edges 1010a-c are unidirectional, in the sense that an AV 100 can travel from a first node to a second node, however the AV 100 cannot travel from the second node to the first node. Edges 1010a-c are unidirectional when they represent, for example, one-way streets, individual lanes of a street, road, or highway, or other features that can only be traversed in one direction due to legal or physical constraints.

In an embodiment, the planning module 404 uses the directed graph 1000 to identify a path 1012 made up of nodes and edges between the start point 1002 and end point 1004.

An edge 1010a-c has an associated cost 1014a-b. The cost 1014a-b is a value that represents the resources that will be expended if the AV 100 chooses that edge. A typical resource is time. For example, if one edge 1010a represents a physical distance that is twice that as another edge 1010b, then the associated cost 1014a of the first edge 1010a may be twice the associated cost 1014b of the second edge 1010b. Other factors that affect time include expected traffic, number of intersections, speed limit, etc. Another typical resource is fuel economy. Two edges 1010a-b may represent the same physical distance, but one edge 1010a may require more fuel than another edge 1010b, e.g., because of road conditions, expected weather, etc.

When the planning module 404 identifies a path 1012 between the start point 1002 and end point 1004, the planning module 404 typically chooses a path optimized for cost, e.g., the path that has the least total cost when the individual costs of the edges are added together.

### Autonomous Vehicle Control

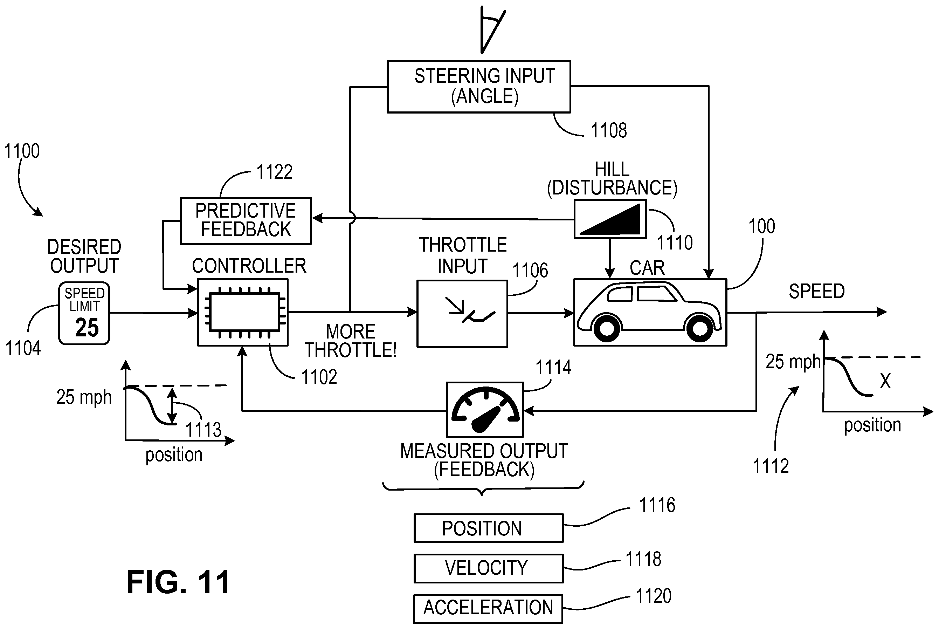

FIG. 11 shows a block diagram 1100 of the inputs and outputs of a control module 406 (e.g., as shown in FIG. 4). A control module operates in accordance with a controller 1102 which includes, for example, one or more processors (e.g., one or more computer processors such as microprocessors or microcontrollers or both) similar to processor 304, short-term and/or long-term data storage (e.g., memory random-access memory or flash memory or both) similar to main memory 306, ROM 1308, and storage device 210, and instructions stored in memory that carry out operations of the controller 1102 when the instructions are executed (e.g., by the one or more processors).

In an embodiment, the controller 1102 receives data representing a desired output 1104. The desired output 1104 typically includes a velocity, e.g., a speed and a heading. The desired output 1104 can be based on, for example, data received from a planning module 404 (e.g., as shown in FIG. 4). In accordance with the desired output 1104, the controller 1102 produces data usable as a throttle input 1106 and a steering input 1108. The throttle input 1106 represents the magnitude in which to engage the throttle (e.g., acceleration control) of an AV 100, e.g., by engaging the steering pedal, or engaging another throttle control, to achieve the desired output 1104. In some examples, the throttle input 1106 also includes data usable to engage the brake (e.g., deceleration control) of the AV 100. The steering input 1108 represents a steering angle, e.g., the angle at which the steering control (e.g., steering wheel, steering angle actuator, or other functionality for controlling steering angle) of the AV should be positioned to achieve the desired output 1104.

In an embodiment, the controller 1102 receives feedback that is used in adjusting the inputs provided to the throttle and steering. For example, if the AV 100 encounters a disturbance 1110, such as a hill, the measured speed 1112 of the AV 100 is lowered below the desired output speed. In an embodiment, any measured output 1114 is provided to the controller 1102 so that the necessary adjustments are performed, e.g., based on the differential 1113 between the measured speed and desired output. The measured output 1114 includes measured position 1116, measured velocity 1118, (including speed and heading), measured acceleration 1120, and other outputs measurable by sensors of the AV 100.

In an embodiment, information about the disturbance 1110 is detected in advance, e.g., by a sensor such as a camera or LiDAR sensor, and provided to a predictive feedback module 1122. The predictive feedback module 1122 then provides information to the controller 1102 that the controller 1102 can use to adjust accordingly. For example, if the sensors of the AV 100 detect ("see") a hill, this information can be used by the controller 1102 to prepare to engage the throttle at the appropriate time to avoid significant deceleration.

### Block Diagram of the Inputs, Outputs, and Components of the Controller

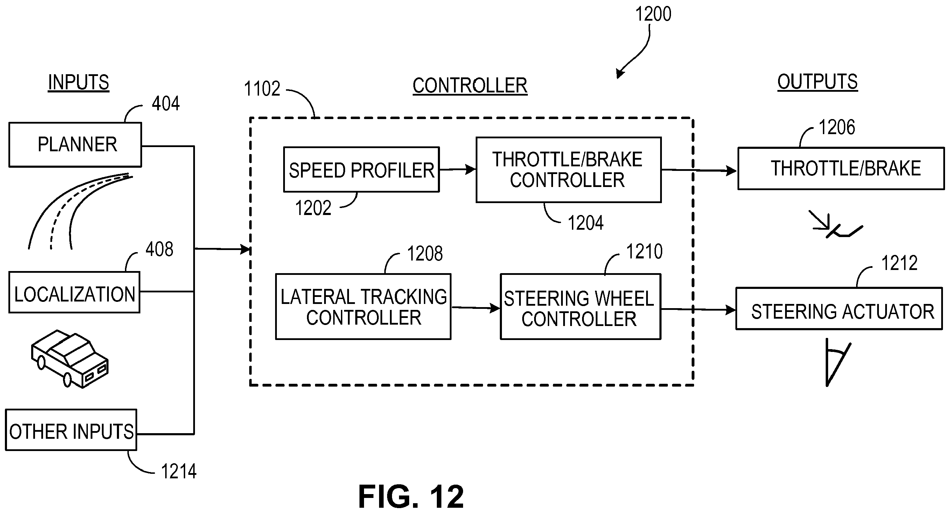

FIG. 12 shows a block diagram 1200 of the inputs, outputs, and components of the controller 1102. The controller 1102 has a speed profiler 1202 which affects the operation of a throttle/brake controller 1204. For example, the speed profiler 1202 instructs the throttle/brake controller 1204 to engage acceleration or engage deceleration using the throttle/brake 1206 depending on, e.g., feedback received by the controller 1102 and processed by the speed profiler 1202.

The controller 1102 also has a lateral tracking controller 1208 which affects the operation of a steering controller 1210. For example, the lateral tracking controller 1208 instructs the steering controller 1204 to adjust the position of the steering angle actuator 1212 depending on, e.g., feedback received by the controller 1102 and processed by the lateral tracking controller 1208.

The controller 1102 receives several inputs used to determine how to control the throttle/brake 1206 and steering angle actuator 1212. A planning module 404 provides information used by the controller 1102, for example, to choose a heading when the AV 100 begins operation and to determine which road segment to traverse when the AV 100 reaches an intersection. A localization module 408 provides information to the controller 1102 describing the current location of the AV 100, for example, so that the controller 1102 can determine if the AV 100 is at a location expected based on the manner in which the throttle/brake 1206 and steering angle actuator 1212 are being controlled. In an embodiment, the controller 1102 receives information from other inputs 1214, e.g., information received from databases, computer networks, etc.

### Architecture for Generation of a Dimensionally Reduced Map

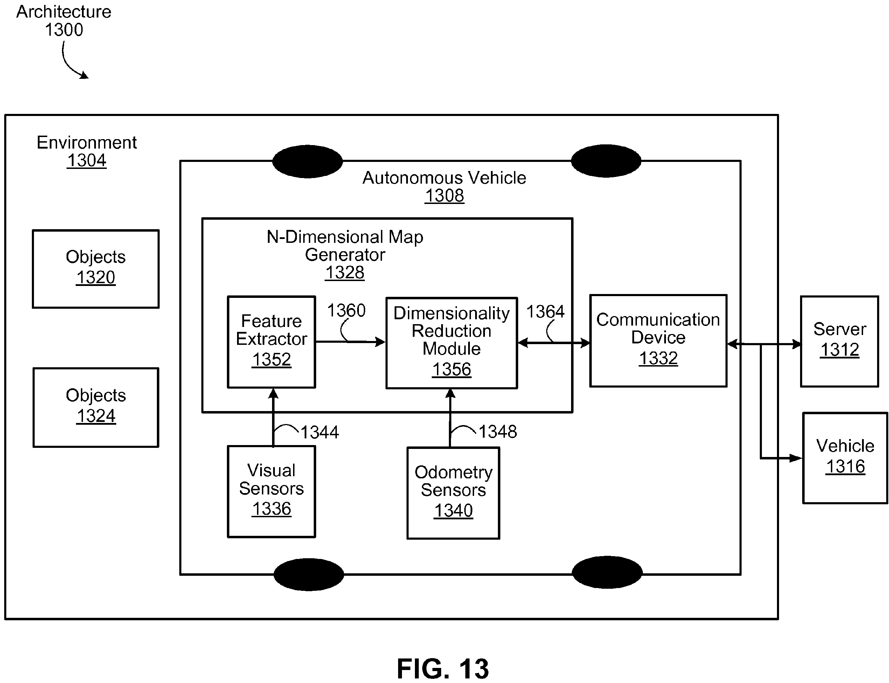

FIG. 13 illustrates a block diagram of an architecture 1300 for generation of a dimensionally reduced map 1364 and localization in an environment 1304, in accordance with one or more embodiments. The architecture 1300 includes the environment 1304, an AV 1308, a remote server 1312, and one or more vehicles 1316. In other embodiments, the architecture 1300 includes additional or fewer components than those described herein. Similarly, the functions can be distributed among the components and/or different entities in a different manner than is described here. The environment 1304 may be an example of the environment 190 illustrated and described above with reference to FIG. 1.

The environment 1304 represents a geographical area, such as a state, a town, a neighborhood, or a road network or segment. The environment 1304 includes the AV 1308, and one or more objects 1320 and 1324 that are represented by environmental features 1360 within a map. The objects are physical entities external to the AV 1308. In other embodiments, the environment 1304 includes additional or fewer components than those described herein. Similarly, the functions can be distributed among the components and/or different entities in a different manner than is described here.

The server 1312 stores data accessed by the AV 1308 and the vehicle 1316, and performs computations used by the AV 1308 and the vehicle 1316. The server 1312 may be an example of the server 136 shown in FIG. 1. The server 1312 is communicatively coupled to the AV 1308 and the vehicle 1316. In one embodiment, the server 1308 may be a "cloud" server as described in more detail above with respect to server 136 in FIGs. 1 and 2. Portions of the server 1308 may be implemented in software or hardware. For example, the server 1308 or a portion of the server 1308 may be part of a PC, a tablet PC, an STB, a smartphone, an internet of things (IoT) appliance, or any machine capable of executing instructions that specify actions to be taken by that machine. In one embodiment, the server 1312 receives and stores one or more N-dimensional maps 1364 of the environment generated by and transmitted to the server 1312 by the AV 1308. The server 1312 may also transmit portions of an N-dimensional map to the vehicle 1316 to assist the vehicle 1316 in navigating the environment.

The vehicle 1316 is a non-autonomous, partly autonomous, or autonomous vehicle located within or outside the environment 1304. In the embodiment of FIG. 13, the vehicle 1316 is illustrated located outside the environment 1304, however, the vehicle 1316 may enter or exit the environment 1304. There are two modes of operation: mapping mode and driving mode. In mapping mode, the AV 1308 travels the environment 1304 to generate an N-dimensional map 1364. In driving mode, the AV 1308 or the vehicle 1316 may receive portions of the generated N-dimensional map 1364 from the AV 1308 or the server 1312 for navigation assistance. In embodiments, the vehicle 1316 may generate or transmit portions of an N-dimensional map to the server 1312, and optionally, to the AV 1308.

The objects 1320 and 1324 are located within the environment 1304 external to the AV 1308, as described above with reference to objects 416 in FIGs. 4 and 5. In one embodiment, the objects 1320 are one or more static features of the environment 1304, such as a road segment, a construction zone, a curb, a building, a parking space located on a road segment, a highway exit or entrance ramp, or a parking lot. Static features are more permanent features of the environment that do not change every day. In driving mode, once static features are mapped, the AV 1308 can focus on navigating around dynamic features, such as another vehicle. In another embodiment, the objects 1320 represent road signs or traffic signs for navigation of a vehicle, such as a marking on a road segment, a road sign located within the environment, a traffic signal, or a median separating two lanes (that would instruct a driver with respect to driving direction and lane changes). In driving mode, the AV 1308 can use such mapped features from the map 1364 to derive context and make navigational decisions. For example, a median separating two lanes would instruct the AV 1308 not to stray too close to the median next to incoming traffic.

In another embodiment, the objects 1320 represent more complex features associated with a vehicular maneuver, such as a splitting of a lane into a plurality of lanes, a merging of a plurality of lanes into a single lane, an intersection of a plurality of lanes, a roundabout including a spatial location for a vehicle to enter or exit the roundabout, or a curving of a lane of a road network. In driving mode, the complex features invoke navigational algorithms within the AV 1308's navigation system to direct the AV 1308 to make complex maneuvers such as three-point turns, lane merges, or entering a roundabout. In another embodiment, the objects 1324 represent more-dynamic features, such as another vehicle, a pedestrian, or a cyclist. The dynamic features instruct the AV 1308 to perform collision prediction and reduce driving aggressiveness if needed. In mapping mode, the objects 1320 and 1324 are classified by the AV 1308 (e.g., grouped into types such as pedestrian, automobile, etc.,) and data representing the classified objects 1320 and 1324 is provided to a module such as the N-dimensional map generator 1328 for map generation. The objects 1320 and 1324 are described above in more detail with reference to the physical object 608, boundaries 616 of a physical object 608, the physical object 706, the ground 802, and the object 808 in FIGs. 6, 7, and 8.

The AV 1308 includes the N-dimensional map generator 1328, one or more sensors 1344 and 1348, and a communication device 1332. The AV 1308 is communicatively coupled to the server 1312 and, optionally, to one or more vehicles 1316. The AV 1308 may be an embodiment of the AV 100 in FIG. 1. In other embodiments, the AV 1308 includes additional or fewer components than those described herein. Similarly, the functions can be distributed among the components and/or different entities in a different manner than is described here.

The one or more visual sensors 1336 visually sense a state of the environment 1304 (e.g., the presence and structure of the objects 1320 and 1324) and transmit M-dimensional sensor data 1344 representing the state to the N-dimensional map generator 1328, wherein M is greater than 2. The visual sensors 1336 may be an embodiment of the sensors 122-123 illustrated and described above with reference to FIG. 1. The visual sensors 1336 are communicatively coupled to the N-dimensional map generator 1328 to transmit the M-dimensional sensor data 1344, wherein N is less than M. The visual sensors 1336 include one or more monocular or stereo video cameras in the visible light, infrared or thermal (or both) spectra, LiDAR, RADAR, ultrasonic sensors, time-of-flight (TOF) depth sensors, and may include temperature sensors, humidity sensors, or precipitation sensors.

In one embodiment, the visual sensors 1336 generate the M-dimensional sensor data 1344 representing the environment 1304, wherein the AV 1308 is located at a first spatiotemporal location within the environment 1304. The first spatiotemporal location includes geographical coordinates, a time associated with the AV 1308 located at the geographical coordinates, or a heading (directional orientation or pose) of the AV 1308 located at the geographical coordinates. In one embodiment, the first spatiotemporal location includes GNSS coordinates, a name of a business, a street address, or a name of a city or town.

In one embodiment, the M-dimensional sensor data 1344 includes three-dimensional LiDAR point cloud data, as described in more detail above with reference to FIGs. 6-8. In one embodiment, the M-dimensional sensor data 1344 includes (M-1)-dimensional LiDAR point cloud data indexed in accordance with time. In this embodiment, more than one set of (M-1)-dimensional LiDAR point cloud data is superimposed. The LiDAR data is superimposed in multiple frames to generate the M-dimensional sensor data 1344. For example, point cloud data corresponding to specific targets, such as the objects 1320, is superimposed. In this manner, changes in traffic conditions may be identified.

In one embodiment, the visual sensors 1336 are spatially distributed smart camera or LiDAR devices capable of processing and fusing the M-dimensional sensor data 1344 of the environment 1304 from a variety of viewpoints into a more useful form of data than individual images. The M-dimensional sensor data 1344 is transmitted to the N-dimensional map generator 1328 for image processing, communication, and storage functions. The visual sensors 1336 are described above in more detail with reference to inputs 502a-d, LiDAR system 602, light 604a-c, light emitter 606, light detectors 610, field of view 614, and light 804a-d in FIGs. 6, 7, and 8. The M-dimensional sensor data 1344 is described above in more detail with reference to outputs 504a-d, image 612, and LiDAR data points 704 in FIGs. 6, 7, and 8.

The one or more odometry sensors 1340 sense a state of the AV 1308 with respect to the environment 1304 and transmit odometry data 1348 representing the state of the AV 1308 to the N-dimensional map generator 1328. The odometry sensors 1340 may be an embodiment of the sensors 121 illustrated and described above with reference to FIG. 1. The odometry sensors 1340 are communicatively coupled to the N-dimensional map generator 1328 to transmit the odometry data 1348. The odometry sensors 1340 include one or more GNSS sensors, IMUs that measure both vehicle linear accelerations and angular rates, wheel speed sensors for measuring or estimating wheel slip ratios, wheel brake pressure or braking torque sensors, engine torque or wheel torque sensors, or steering angle and angular rate sensors.

The odometry sensors 1340 generate the odometry data 1348 representing an operational state of the AV 1304. The odometry data 1348 is associated with the spatiotemporal location at which the AV 1304 is located, as described above with reference to the visual sensors 1336. In one embodiment, the odometry sensors 1340 include a controller area network (CAN) bus of the vehicle and the odometry data 1348 is generated using the CAN bus. The CAN bus is a vehicle bus for microcontrollers and devices located on the AV 1308 to communicate with each other. The CAN bus operates in accordance with a message-based protocol, designed for multiplex electrical wiring within vehicles. In one embodiment, the CAN bus is a multi-master serial bus for connecting electronic control units (ECUs) on the AV 1308.

In one embodiment, the odometry sensors 1340 include an IMU of the AV 1308 and the odometry data 1348 is generated using the IMU. In one embodiment, the odometry sensors 1340 measure and report the AV 1308's specific force, angular rate, or a magnetic field surrounding the AV 1308, using a combination of accelerometers, gyroscopes, or magnetometers. In another embodiment, the odometry sensors 1340 generate odometry data 1348 including a speed, a steering angle, a longitudinal acceleration, or a lateral acceleration. The odometry sensors 1340 utilize the raw IMU measurements to determine attitude, angular rates, linear velocity, and position relative to a global reference frame. In one embodiment, the odometry data 1348 reported by the IMU is used to determine attitude, velocity, and position by integrating angular rate from a gyroscope to calculate angular position. The odometry data 1348 is fused with a gravity vector measured by the odometry sensors 1340 to estimate attitude.

The N-dimensional map generator 1328 generates an N-dimensional map 1364 of the environment 1304 from the M-dimensional sensor data 1344. The N-dimensional map generator 1328 includes a feature extractor 1352 and a dimensionality reduction module 1356. The N-dimensional map generator 1328 is communicatively coupled to the visual sensors 1336 and the odometry sensors 1340 to receive the M-dimensional sensor data 1344 and the odometry data 1348. The N-dimensional map generator 1328 is communicatively coupled to a communication device 1332 to transmit the N-dimensional map 1364 to the communication device 1332.

The N-dimensional map generator 1328 may be an embodiment of the planning module 404 shown in FIG. 4 or may be contained within the planning module 404. The N-dimensional map generator 1328 may be implemented in software or hardware. For example, the N-dimensional map generator 1328 or a portion of the N-dimensional map generator 1328 may be part of a PC, a tablet PC, an STB, a smartphone, an IoT appliance, or any machine capable of executing instructions that specify actions to be taken by that machine. In other embodiments, the N-dimensional map generator 1328 includes additional or fewer components than those described herein. Similarly, the functions can be distributed among the components and/or different entities in a different manner than is described here.

The feature extractor 1352 extracts an M-dimensional environmental feature 1360 representing the environment at the spatiotemporal location at which the AV 1308 is located from the M-dimensional sensor data 1344. The feature extractor 1352 is communicatively coupled to the visual sensors 1336 to receive the M-dimensional sensor data 1344. The feature extractor 1352 may be implemented in software or hardware. In one embodiment, the feature extractor 1352 or a portion of the feature extractor 1352 is part of a PC, a tablet PC, an STB, a smartphone, an IoT appliance, or any machine capable of executing instructions that specify actions to be taken by that machine.

In one embodiment, the feature extractor 1352 generates a plurality of pixels from the M-dimensional sensor data 1344. The number N of pixels generated corresponds to a number of LiDAR beams of the visual sensors 1336 (e.g., the number of LiDAR beams 604a-c from the light emitter 606 of the LiDAR system 602 in FIG. 6). The feature extractor 1352 analyzes a depth difference between a first pixel of the plurality of pixels and neighboring pixels of the first pixel to extract the M-dimensional environmental feature 1360. In one embodiment, the feature extractor 1352 renders each pixel of the plurality of pixels according to a range of heights collected for the pixel. The feature extractor 1352 determines a visible height of a target object (e.g., 1320) and is invariant to viewpoint. In another embodiment, the feature extractor 1352 generates a digital model of the target object 1320 from the M-dimensional sensor data 1344 and uses sequential filters to segment the digital model into a distinct M-dimensional environmental feature 1360.

In one embodiment, the feature extractor 1352 extracts the M-dimensional environmental feature from the plurality of pixels, responsive to a depth difference between a first pixel of the plurality of pixels and neighboring pixels of the first pixel being less than a threshold T. In one embodiment, the feature extractor 1352 specifies a neighborhood window defining a rectangular region surrounding a first pixel. The pixels falling within the window are treated as neighboring pixels of the first pixel. When generating the plurality of pixels from the M-dimensional sensor data 1344, the feature extractor 1352 considers the directional orientation of the AV 1304 as well as the positional uncertainty of the M-dimensional environmental feature 1360. In one embodiment, the feature extractor 1352 uses variable-sized Gaussian kernels when extracting the M-dimensional environmental feature to encode the positional uncertainty in the image.

In one embodiment, the feature extractor 1352 segregates pixels from the M-dimensional sensor data 1344 into individual segments. The feature extractor 1352 filters the segments to remove small non-object features that are not of interest, for example, a minor crack in a road, a small defect in a street sign, etc. The feature extractor 1352 performs a labeling function on the remaining segments to assign an object identifier to each pixel from the M-dimensional sensor data 1344. Each pixel associated with the same object receives the same identifier. In one embodiment, K-means clustering or a region-growing approach is used to extract the M-dimensional environmental feature 1360 from the pixels.

The dimensionality reduction module 1356 generates an N-dimensional map 1364 of the environment 1304 from the extracted M-dimensional environmental feature 1360. The dimensionality reduction module 1356 is communicatively coupled to the feature extractor 1352 to receive the extracted M-dimensional environmental feature 1360. The dimensionality reduction module 1356 is communicatively coupled to the odometry sensors 1340 to receive the odometry data 1348. The dimensionality reduction module 1356 is communicatively coupled to the communication device 1332 to transmit the generated N-dimensional map 1364. The dimensionality reduction module 1356 may be implemented in software or hardware. In one embodiment, the dimensionality reduction module 1356 or a portion of the dimensionality reduction module 1356 is part of a PC, a tablet PC, an STB, a smartphone, an IoT appliance, or any machine capable of executing instructions that specify actions to be taken by that machine.

In one embodiment, the M-dimensional sensor data 1344 includes three-dimensional LiDAR point cloud data as illustrated and described in more detail above with reference to FIGs. 6-8. The dimensionality reduction module 1356 generates the N-dimensional version of the M-dimensional environmental feature 1360 by mapping the three-dimensional LiDAR point cloud data to a two-dimensional image. In one embodiment, the dimensionality reduction module 1356 extracts, from the two-dimensional image, edge pixels representing a shape of the target object 1320 using the Canny operator for edge detection. The extracted edge pixels are assembled into an outline of the object 1320 using the Hough transform to extract a polygon corresponding to the N-dimensional version of the M-dimensional environmental feature 1360.

In one embodiment, the dimensionality reduction module 1356 generates the N-dimensional map 1364 by mapping the M-dimensional sensor data 1344 to a plane corresponding to the N-dimensional map 1364. In one embodiment, the dimensionality reduction module 1356 maps the M-dimensional sensor data 1344 onto a plane by drawing the data on the plane using a Gaussian kernel. A variance of the kernel may reflect both a range uncertainty and a positional uncertainty resulting from sparsely sampling the surface of the object 1320. Other nearby points that are part of the same object 1320 are connected with a line that is also drawn with a Gaussian kernel.

In one embodiment, the dimensionality reduction module 1356 uses a plane-finding method to map the M-dimensional sensor data 1344 to a plane. In one embodiment, the dimensionality reduction module 1356 uses a region-growing plane-finding method approach to exploit the structure of the M-dimensional sensor data 1344 using a rasterized version of the M-dimensional sensor data 1344. By starting at a given point within the M-dimensional sensor data 1344 and expanding outwards (e.g., along a scan-line), the dimensionality reduction module 1356 updates plane parameter estimates until the plane is generated. In another embodiment, the dimensionality reduction module 1356 uses a RANSAC-based plane-finding method to directly fit planes to the M-dimensional sensor data 1344.

In another embodiment, the dimensionality reduction module 1356 maps the M-dimensional sensor data 1344 to a plurality of planes, wherein each plane of the plurality of planes corresponds to a distinct N-dimensional map. The plurality of planes is used, for example, to identify and annotate three-dimensional height-related features, such as curbs or the height of buildings. The benefits and advantages of using the dimensionality reduction module 1356 are that the Gaussian kernel can smoothen the appearance of the surface of the object 1320, thereby preventing the detection of false features.

In one embodiment, the generating of the N-dimensional version of the M-dimensional environmental feature 1360 includes counting instances of N-dimensional location coordinates of the M-dimensional environmental feature 1360. The N-dimensional location coordinates include latitude, longitude, altitude, or coordinates with reference to an external object, for example, object 1320 or vehicle 1316. The dimensionality reduction module 1356 embeds the N-dimensional version of the M-dimensional environmental feature 1360 into the N-dimensional map 1364 by embedding the N-dimensional location coordinates of the M-dimensional environmental feature 1360 within the N-dimensional map 1364, responsive to a count of instances of the N-dimensional location coordinates of the M-dimensional environmental feature 1360 exceeding a threshold T. In one embodiment, the dimensionality reduction module 1356 selects data points of the M-dimensional environmental feature 1360, fits an instance of N-dimensional location coordinates to the data points, and stores the instance of the N-dimensional location coordinates of the M-dimensional environmental feature 1360. When the count of the instances of the N-dimensional location coordinates of the M-dimensional environmental feature 1360 exceeds the threshold T, the dimensionality reduction module 1356 embeds the N-dimensional version of the M-dimensional environmental feature 1360 into the N-dimensional map 1364.

The N-dimensional map generator 1328 associates the M-dimensional environmental feature 1360 with the odometry data 1348 received from the odometry sensors 1340 to generate the N-dimensional map. The benefits and advantages of associating the M-dimensional environmental feature 1360 with the odometry data 1348 are that errors that might result from sensor noise and the AV 1308's estimation of its directional orientation and location are reduced. Associating the M-dimensional environmental feature 1360 with the odometry data 1348 enables the AV 1308 to addresses inaccuracies such as misidentified loop closures. The AV 1308 resolves such errors using the odometry data 1348 to close loops, i.e., recognize when two different spatiotemporal locations are incorrectly associated and remove the association between the two different spatiotemporal locations.

In one embodiment, the AV 1308 is located at a second spatiotemporal location within the environment 1304. The second spatiotemporal location is distinct from the first spatiotemporal location described above. Similar to the first spatiotemporal location, the second spatiotemporal location includes geographical coordinates, a time associated with the AV 1308 located at the geographical coordinates, or a heading (directional orientation or pose) of the AV 1308. In another embodiment, the second spatiotemporal location includes GNSS coordinates, a name of a business, a street address, or a name of a city or town.

The visual sensors 1336 of the AV 1308 (located at the second spatiotemporal location) generate second M-dimensional sensor data representing the environment 1304 at the second spatiotemporal location. The dimensionality reduction module 1356 associates the second M-dimensional sensor data with the second spatiotemporal location to make the second M-dimensional sensor data distinct from the M-dimensional sensor data 1344. The benefits and advantages of this approach are that the dimensionality reduction module 1356 generates the N-dimensional map such that the AV 1308 is able to correctly distinguish between two or more plausible positions within the N-dimensional map 1364. The N-dimensional version of the M-dimensional feature 1360 is therefore embedded at the correct spatiotemporal location within the N-dimensional map 1364.

In one embodiment, the N-dimensional map generator 1328 associates the M-dimensional environmental feature 1360 with the odometry data 1348 by correlating or probabilistic matching of the M-dimensional environmental feature to the spatiotemporal location. The N-dimensional map generator 1328 uses the odometry data 1348 to determine location coordinates and a directional orientation of the AV 1308 relative to the N-dimensional map 1364. The location coordinates include latitude, longitude, altitude, or coordinates with reference to an external object, for example, object 1320 or vehicle 1316. In one embodiment, the N-dimensional map generator 1328 uses the odometry data 1348 to estimate a change in the AV 1308's position over time relative to an initial spatiotemporal location by analyzing the associated M-dimensional sensor data 1344. The feature extractor 1352 extracts image feature points from the M-dimensional sensor data 1344 and tracks the image feature points in an image sequence to determine location coordinates of the AV 1308. The AV 1308 may use single cameras, stereo cameras, or omnidirectional cameras to acquire the M-dimensional sensor data 1344. The feature extractor 1352 defines features of interest and performs probabilistic matching of the features across image frames to construct an optical flow field for the AV 1308.

In one embodiment, the N-dimensional map generator 1328 uses correlation or probabilistic matching to establish a correspondence between two images generated by the feature extractor 1352. As described above, an optical flow field is constructed, for example, using the Lucas-Kanade method. The N-dimensional map generator 1328 examines the flow field vectors for potential tracking errors and removes any outliers that are identified. The N-dimensional map generator 1328 estimates motion of the visual sensors 1336 from the constructed optical flow. The estimated motion is then used to determine a spatiotemporal location and directional orientation of the AV 1308. In one embodiment, the N-dimensional map generator 1328 transmits the determined location coordinates and the directional orientation, via the communication device 1332, to the remote server 1312 or vehicle 1316 to provide navigation assistance to the vehicle 1316. The map transmission is achieved over a network as described above with reference to FIG. 1.

In one embodiment, the dimensionality reduction module 1356 embeds the N-dimensional version of the M-dimensional environmental feature 1360 by embedding a computer-readable semantic annotation corresponding to the N-dimensional version of the M-dimensional environmental feature 1360 within the N-dimensional map 1364. The dimensionality reduction module 1356 embeds the semantic annotation such that it becomes a source of information that is easy to interpret, combine and reuse by the AV 1308, the server 1312, or the vehicle 1316. For example, the semantic annotation may be a structured digital marginalia that is invisible in the human-readable part of the N-dimensional map 1364. Because the semantic annotation is machine-interpretable, the semantic annotation enables the AV 1308 to perform operations such as classifying, linking, inferencing, searching, or filtering the N-dimensional map 1364.

The dimensionality reduction module 1356 thereby enriches the N-dimensional map content with computer-readable information by linking the N-dimensional map 1364 to the extracted environmental features. In one embodiment, the N-dimensional version of the M-dimensional environmental feature 1360 is segregated into one or more geometric blocks, wherein each geometric block is a semantic annotation. For example, the feature may represent a plurality of lanes of the road segment orientated in the same direction and each geometric block represents a single lane of the segment. In one embodiment, the geometric blocks are superimposed onto the M-dimensional sensor data 1344 to generate a polygon, which represents a more complex feature. For example, a polygon may represent a splitting of a lane of the drivable road surface into a plurality of lanes, a merging of a plurality of lanes of the drivable road surface into a single lane, an intersection of a plurality of lanes, or a roundabout.

The map 1364 enables autonomous driving using semantic features such as the presence of a parking spot or a side road. In driving mode, the vehicle 1316 combines its own sensor data with the semantic annotations from the map 1364 to observe the road conditions in real-time. Thus, the vehicle 1316 can understand road conditions over 100 m in advance. The detailed map 1364 provides higher accuracy and reliability than on-board sensors alone. The map 1364 provides an estimate of the vehicle 1316's spatiotemporal location, and the vehicle 1316's navigation system is aware of the intended destination. The vehicle 1316 determines a local navigation goal within view of the vehicle 1316. The vehicle 1316's sensors generate a path to the local navigation goal using the map 1364 to determine the location of the road's edges.

The communication device 1332 communicates data such as instructions or measured or inferred properties of the AV 1308 or other vehicles' states and conditions with the server 1312, a passenger within the AV 1308, or other vehicles. The communication device 1332 may be an embodiment of the communication device 140 shown in FIG. 1. The communication device 1332 is communicatively coupled to the server 1312 and optionally the vehicle 1316 across a network. In an embodiment, the communications device 1332 communicates across the Internet, electromagnetic spectrum (including radio and optical communications) or other media (e.g., air and acoustic media). Portions of the communication device 1332 may be implemented in software or hardware. For example, the communication device 1332 or a portion of the communication device 1320 may be part of a PC, a tablet PC, an STB, a smartphone, an IoT appliance, or any machine capable of executing instructions that specify actions to be taken by that machine. The communication device 1332 is described in more detail above with respect to communication device 140 in FIG. 1.

The benefits and advantages of the embodiments disclosed herein are that the extracting of the M-dimensional environmental feature from the M-dimensional sensor data is computationally less expensive than traditional methods that directly scan a point cloud space. The N-dimensional map is encoded to require fewer bits of storage than the M-dimensional representation. The N-dimensional map reduces resources required to store and transmit data to a remote server and to other vehicles. The AV is able to efficiently determine localization for real-time navigation. Complexity of navigating the N-dimensional map 1364 is also reduced. Navigating the AV using the generated N-dimensional map results in increased passenger and pedestrian safety, lower wear and tear on the AV, reduced travel time, a reduced travel distance, etc. Increased safety for other vehicles on the road network is also achieved.

The benefits and advantages of associating the M-dimensional environmental feature with the odometry data are that errors that might result from sensor noise and the AV's estimation of its directional orientation and location are reduced. Associating the M-dimensional environmental feature with the odometry data enables the AV to addresses inaccuracies such as misidentified loop closures. The AV resolves such errors using the odometry data to close loops, i.e., recognize when two different spatiotemporal locations are incorrectly associated and remove the association between the two different spatiotemporal locations.

Further benefits and advantages of using the dimensionality reduction module are that the dimensionality reduction module generates the N-dimensional map such that the AV is able to correctly distinguish between two or more plausible positions within the N-dimensional map. The N-dimensional version of the M-dimensional feature is therefore embedded at the correct spatiotemporal location within the N-dimensional map. Moreover, the built-in Gaussian kernel can smoothen the appearance of the surface of the target objects, thereby preventing the detection of false features.

### Example Environment for Automatic Generation of a Dimensionally Reduced Map

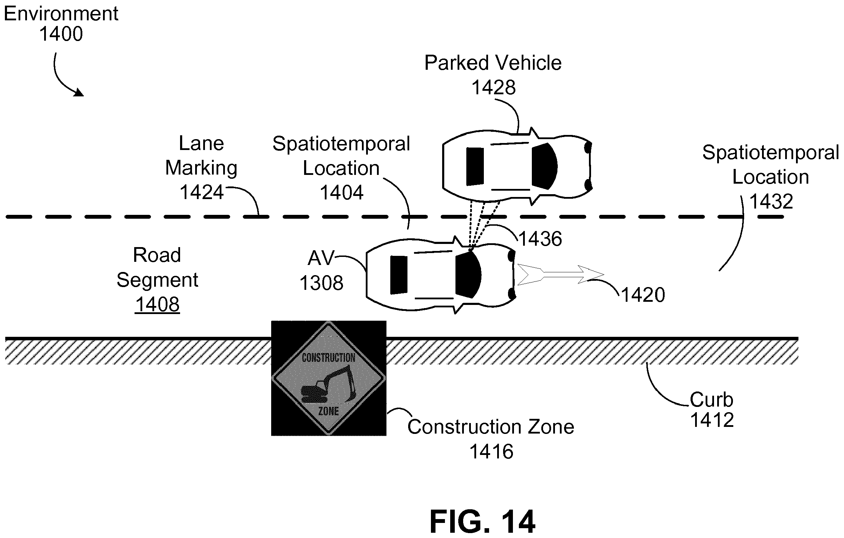

FIG. 14 illustrates an example environment 1400 for automatic generation of a dimensionally reduced map 1364 and spatiotemporal localization, in accordance with one or more embodiments. The environment 1400 includes a spatiotemporal location, 1404, at which the AV 1308 is located. The environment 1400 includes a road segment 1408, a curb 1412, a construction zone 1416, a road marking 1420 (directional arrow), a lane marking 1424 representing a boundary of the lane in which the AV 1308 is located, and a parked vehicle 1428 outside the lane.

The visual sensors 1336 of the AV 1308 generate M-dimensional sensor data 1344 representing the environment 1400 at the spatiotemporal location 1404. For example, the M-dimensional sensor data 1344 generated in FIG. 14 describes the shape, structure, and position of the curb 1412, the construction zone 1416, the road marking 1420, the lane marking 1424, or the parked vehicle 1428. The visual sensors 1336 include one or more monocular or stereo video cameras in the visible light, infrared or thermal (or both) spectra, LiDAR 1436, RADAR, ultrasonic sensors, time-of-flight (TOF) depth sensors, and may include temperature sensors, humidity sensors, or precipitation sensors. In one embodiment, the M-dimensional sensor data 1344 includes camera images, three-dimensional LiDAR point cloud data 1436, or (M-1)-dimensional LiDAR point cloud data indexed in accordance with time.

The odometry sensors 1340 generate odometry data 1348 representing an operational state of the AV 1308. The AV 1308's odometry sensors 1340 include one or more GNSS sensors, IMUs that measure both vehicle linear accelerations and angular rates, wheel speed sensors for measuring or estimating wheel slip ratios, wheel brake pressure or braking torque sensors, engine torque or wheel torque sensors, or steering angle and angular rate sensors. The odometry data 1348 is associated with the spatiotemporal location 1404 and the road segment 1408. In one embodiment, the N-dimensional map generator 1328 determines the location 1404 and a directional orientation of the AV 1308 using the odometry data 1348. The AV 1308 transmits the determined location coordinates and the directional orientation to the server 1312 or another vehicle 1316 to provide navigation assistance to the other vehicle 1316.

The N-dimensional map generator 1328 generates an N-dimensional map 1364 of the environment 1400 from the M-dimensional sensor data 1344, wherein N is less than M. The dimensionality of and data storage needed for the N-dimensional map 1364 is thereby reduced. The complexity of analyzing the N-dimensional map 1364 in driving mode is also reduced. To generate the N-dimensional map 1364, the feature extractor 1352 extracts an M-dimensional environmental feature 1360 from the M-dimensional sensor data 1344. For example, the M-dimensional environmental feature 1360 may represent the construction zone 1416 or the road marking 1420. In one embodiment, the extracting of the M-dimensional environmental feature 1360 includes generating a plurality of pixels, wherein a number of the plurality of pixels corresponds to a number of LiDAR beams 1436. The AV 1308 analyzes a depth difference between a first pixel of the plurality of pixels and neighboring pixels of the first pixel to extract the M-dimensional environmental feature 1360.

The N-dimensional map generator 1328 associates the M-dimensional environmental feature 1360 with the odometry data 1348. Errors that might result from sensor noise during the AV 1308's estimation of its directional orientation and location 1404 are thereby reduced. The AV 1308 resolves such errors using the odometry data 1348 to close loops, for example, recognize when two different spatiotemporal locations, such as 1404 and 1432, have been incorrectly related and remove the relation between the two different spatiotemporal locations 1404 and 1432.

In one embodiment, the N-dimensional map generator 1328 generates an N-dimensional version of the M-dimensional environmental feature 1360 by mapping three-dimensional LiDAR point cloud data to a two-dimensional image. The N-dimensional map generator 1328 extracts, from the two-dimensional image, edge pixels representing a shape of the target object 1416 using an edge operator for edge detection. The extracted edge pixels are assembled into an outline of the object 1416 using a transform to extract a polygon corresponding to the N-dimensional version of the M-dimensional environmental feature 1360.

The N-dimensional map generator 1328 embeds a computer-readable semantic annotation corresponding to the N-dimensional version of the M-dimensional environmental feature 1360 within the N-dimensional map 1364. In one embodiment, the N-dimensional version of the M-dimensional environmental feature 1360 is represented by a geometric shape. For example, the shape may represent the construction zone 1416. In one embodiment, the geometric blocks are superimposed onto the M-dimensional sensor data 1436 to generate a polygon, which represents a more complex feature. For example, a polygon may represent the lane marking 1424.

In one embodiment, the visual sensors 1336 generate second M-dimensional sensor data representing the environment 1400 when the AV 1308 is located at a second spatiotemporal location 1432 within the environment 1400. The AV 1308 associates the second M-dimensional sensor data with the second spatiotemporal location 1432 to make the second M-dimensional sensor data distinct from the M-dimensional sensor data 1344. The AV 1308 thereby generates a uniquely identifying signature for all the nodes (spatiotemporal locations) in the environment 1400. The N-dimensional map generator 1328 receives the LiDAR point cloud data and generates a base map on the basis of the LiDAR point cloud data. This map may have inaccuracies and errors in the form of misidentified loop closures. These errors are resolved by associating the second M-dimensional sensor data with the second spatiotemporal location 1432 using the odometry measurement data 1348 to close loops, for example, recognize when two nodes, such as 1404 and 1432, are incorrectly related and remove the relation of the two nodes.

### Example Dimensionally Reduced Map for Navigation of an AV

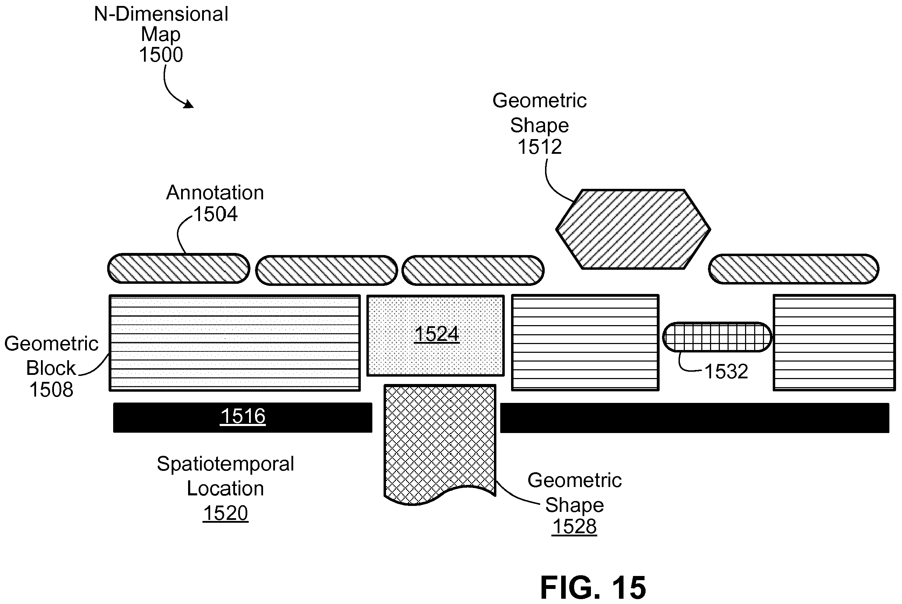

FIG. 15 illustrates an example dimensionally reduced map 1500 for navigation of the AV 1308, in accordance with one or more embodiments. The map 1500 corresponds to the environment 1400 illustrated and described above with reference to FIG. 14. In the mapping mode, the dimensionality reduction module 1356 embeds the N-dimensional version of the lane marking feature 1424 in FIG. 14 as a computer-readable semantic annotation 1504 within the N-dimensional map 1500. The semantic annotation 1504 is a source of information that is easy to interpret, combine and reuse by the AV 1308, the server 1312, or the vehicle 1316 in FIG. 13. In one embodiment, the semantic annotation 1504 is a colored, structured digital marginalia that is machine-interpretable. The color or texture of the annotation 1504 enables the AV 1308 to perform operations such as classifying, linking, inferencing, searching, or filtering the N-dimensional map 1500. In the driving mode, the color of the feature may indicate to the AV 1308 that the feature is part of a lane marking 1424 and rules for staying within the lane are enabled to navigate the AV 1308.

The dimensionality reduction module 1356 thereby enriches the N-dimensional map content with computer-readable information by linking the N-dimensional map 1500 to the extracted environmental features. In one embodiment, the N-dimensional version of the M-dimensional environmental feature 1360 is segregated into one or more geometric blocks, wherein each geometric block is a semantic annotation, for example geometric block 1508. The geometric block 1508 represents a drivable area associated with the road segment 1408 in FIG. 14. The lanes of the road segment 1408 that are orientated in the same direction may have the same annotations and color of the geometric block 1508. The direction of the lane is represented by the semantic annotation 1532, which is a representation of the road marking 1420 in FIG. 14.

In one embodiment, geometric blocks are superimposed onto the M-dimensional sensor data 1344 to generate a polygon, such as the geometric shape 1512, which represents a more complex feature. The geometric shape 1512 represents the parked vehicle 1428. In the driving mode, the color or other information associated with the geometric shape 1512 indicates to the AV 1308 that the location of the parked vehicle 1428 is a parking spot. Each time the AV 1308 makes a subsequent visit to the road segment 1408 in the mapping mode, the AV 1308 searches for changes in the landscape and updates the N-dimensional map 1500. For example, the AV 1308 travels the environment 1400 multiple times in the mapping mode and may not observe the parked vehicle 1428 on some occasions. This is interpreted by the AV 1308's navigation system or the server 1312 to mean that the location of the parked vehicle 1428 may be occupied by another vehicle or not occupied at other times.

The N-dimensional map generator 1328 embeds semantic metadata, markers, and custom annotations, for example, 1516. In the driving mode, the AV 1308 can use the annotation 1516 to determine a relationship between different spatiotemporal locations. For example, the AV 1308 determines that the annotation 1516 represents the curb 1412 in FIG. 2. Therefore, the AV 1308 should drive in the drivable region indicated by the geometric block 1508 and not drive in the spatiotemporal location 1520 on the other side of the curb.

In one embodiment, every location or place in the map 1500 is represented by latitude and longitude coordinates. In driving mode, the AV 1308 can thereby use a search-based methodology to determine a distance or path between two locations, such as 1404 and 1432 in FIG. 14. Traffic or driving information is added to and retrieved from the map 1500 by annotating each spatiotemporal location using semantic annotations. For example, the color of the semantic annotation 1524 indicates that the AV 1308 should slow down or otherwise exercise caution, such as increasing a lateral distance from the construction zone 1416 represented by the geometric shape 1528.

In some embodiments, the AV 1308 collects 3D data (e.g., LIDAR point data) from the visual sensors 1336 and generates data that can be used in a 2D map representation. For example, the visual sensors 1336 of the AV 1308 may be used to generate visual data 1344 representing, using a vertical height, a physical feature at a spatiotemporal location 1404 where the AV 1308 is located. The visual data 1344 includes a plurality of pixels corresponding to a plurality of two-dimensional planes that represent the physical feature. The AV 1308 thereby collects and matches the sensor measurements into a common map representation while accounting for sensor noise and uncertainty. Using the visual data 1344, the AV 1308 determines a depth difference between a first pixel of the plurality of pixels and a second pixel. The first pixel corresponds to a first two-dimensional plane of the plurality of two-dimensional planes and the second pixel corresponds to a second two-dimensional plane of the plurality of two-dimensional planes. The AV 1308 thereby analyzes the point cloud map as an N-pixel image where N is the number of LIDAR beams. For each pixel in the image, the AV 1308 analyzes the depth difference with the pixel's neighboring pixels to determine vertical features. Using one or more processors 146, the AV 1308 embeds the depth difference within a third two-dimensional plane. The third two-dimensional plane represents the map 1500. The depth difference is embedded within the map 1500 at the spatiotemporal location 1404. The AV 1308 thereby transforms the map representation from a 3D point cloud map to a 2D map to reduce the amount of data storage. Identifying vertical features in the environment 1304 are marked in the 2D map. For each vertical feature, the 3D dimensions of the feature are converted into 2D dimensions.

In some embodiments, the odometry sensors 1340 are used to generate odometry data 1348 corresponding to the spatiotemporal location 1404. The AV 1308 thereby uses the sensor measurements 1348 to estimate the position of the AV 1308 relative to the 2D map representation 1500 in a more efficient manner than would be performed in a 3D map representation. Using the one or more processors 146, the AV 1308 associates the depth difference with the odometry data 1348.

In some embodiments, the determining of the depth difference is performed responsive to the depth difference between the first pixel and the second pixel being less than a threshold. In some embodiments, the associating of the depth difference with the odometry data 1348 includes correlating the depth difference to the spatiotemporal location 1404. In some embodiments, the associating of the depth difference with the odometry data 1348 includes probabilistically matching the depth difference to the spatiotemporal location 104. For example, the AV 1308 or another entity may use the probabilistic matching for verification purposes when a location of a physical feature is marked on the map and correlated with the position of the AV 1308 at the location 1404.

In some embodiments, the visual data 1344 includes three-dimensional LIDAR point cloud data. The AV 1308 converts the three-dimensional LIDAR point cloud data to a two-dimensional image on the third two-dimensional plane by embedding the depth difference within the third two-dimensional plane. For example, when the depth difference between a pixel and neighboring pixels is smaller than a set value, the AV 1308 marks the depth difference as a vertical feature. In some embodiments, the visual data 1344 includes M-dimensional LIDAR point cloud data indexed in accordance with time. The map 1500 therefore includes N-dimensional image data indexed in accordance with time and N is less than M.

In some embodiments, the embedding of the depth difference includes inserting a computer-readable semantic annotation 1504 corresponding to the depth difference within the map 1500. The AV 1308 thereby updates a live map representation (e.g., as displayed to a teleoperator) and may transmit the data to other AV systems.

In some embodiments, the AV 1308 uses the odometry data 1348 to determine the spatiotemporal location 1404 of the AV 1308 relative to the map 1500. In some embodiments, the AV 1308 uses the odometry data 1348 to determine a directional orientation of the AV 1308 relative to the map 1500. In some embodiments, a controller area network (CAN) bus of the AV 1308 is used to transmit the visual data 1344 from the visual sensors 1336 of the AV 1308 to the one or more processors 146. In some embodiments, the CAN bus of the AV 1308 is used to transmit the odometry data 1348 from an inertial measurement unit (IMU) of the AV 1308 to the one or more processors 146. In some embodiments, the odometry data 1348 includes a speed, a steering angle, a longitudinal acceleration, or a lateral acceleration.

In some embodiments, the determining of the depth difference includes counting instances of two-dimensional location coordinates of the visual data 1344. In some embodiments, the embedding of the depth difference includes responsive to a count of the instances of the two-dimensional location coordinates exceeding a threshold, inserting the depth difference at the two-dimensional location coordinates within the map 1500.

In some embodiments, the depth difference represents a portion of a road segment, a curb, a building, or a parking space. In some embodiments, the depth difference represents a portion of a marking on a road segment, a road sign, a traffic signal, or a lane separator. In some embodiments the depth difference represents a portion of a vehicle, a pedestrian, or a cyclist.

### Process for Automatic Generation of a Dimensionally Reduced Map

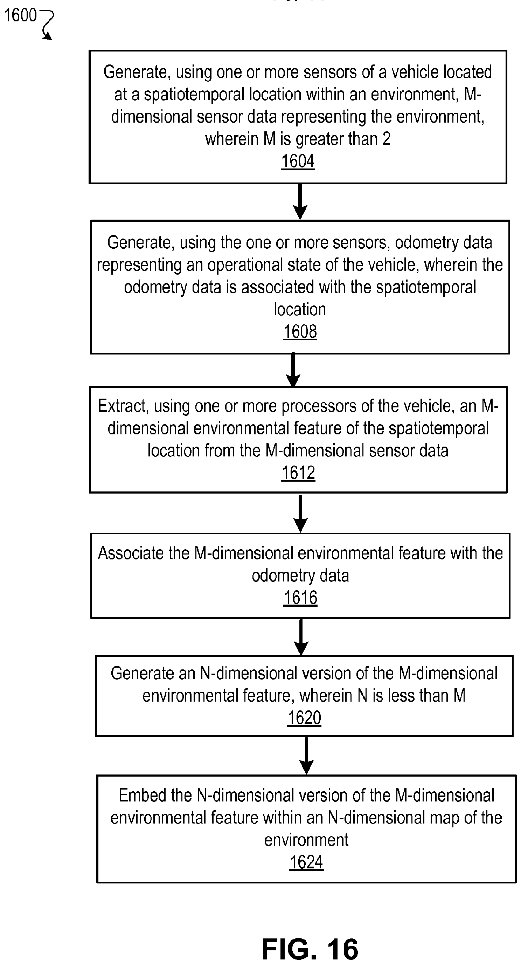

FIG. 16 illustrates a process 1600 for automatic generation of a dimensionally reduced map 1364 and spatiotemporal localization in an environment 1304 for navigation of the AV 1308, in accordance with one or more embodiments. In one embodiment, the process of FIG. 16 is performed by one or more components of the AV 1308, such as the N-dimensional map generator 1328. Other entities, such as the remote server 1312, perform some or all of the steps of the process 1600 in other embodiments. Likewise, embodiments may include different and/or additional steps, or perform the steps in different orders.

The AV 1308 generates 1604 M-dimensional sensor data 1344 representing the environment 1304, wherein M is greater than 2. In one embodiment, used here as an example, the M-dimensional sensor data 1344 is three-dimensional LiDAR point cloud data. In this embodiment, the AV 1308 uses the visual sensors 1336, for example the LiDAR 123 described above with reference to FIG. 1, to generate the three-dimensional LiDAR point cloud data. The AV 1308 is located at a spatiotemporal location within the environment 1304. The visual sensors 1336 may further include one or more monocular or stereo video cameras in the visible light, infrared or thermal (or both) spectra, RADAR, ultrasonic sensors, or time-of-flight (TOF) depth sensors, and may include temperature sensors, humidity sensors, or precipitation sensors.

The AV 1308 generates 1608 odometry data 1348 representing an operational state of the AV 1308 using the odometry sensors 1340. The odometry data 1348 is associated with the spatiotemporal location. The odometry sensors 1340 sense a state of the AV 1308 with respect to the environment 1304 and transmit the odometry data 1348 representing the state of the AV 1308 to the N-dimensional map generator 1328. In the example embodiment described in the previous paragraph, the N-dimensional map generator 1328 is a two-dimensional map generator. The odometry sensors 1340 include one or more GNSS sensors, IMUs that measure both vehicle linear accelerations and angular rates, wheel speed sensors for measuring or estimating wheel slip ratios, wheel brake pressure or braking torque sensors, engine torque or wheel torque sensors, or steering angle and angular rate sensors.

The AV 1308 extracts 1612 an M-dimensional environmental feature 1360 of the spatiotemporal location from the M-dimensional sensor data 1344. In the example embodiment described in the previous paragraphs, the M-dimensional environmental feature 1360 is a three-dimensional environmental feature extracted from the three-dimensional LiDAR point cloud data. In this example embodiment, the AV 1308 generates a plurality of pixels from the three-dimensional LiDAR point cloud data. The number of pixels generated corresponds to a number of LiDAR beams of the LiDAR 123. The AV 1308 analyzes a depth difference between a first pixel of the plurality of pixels and neighboring pixels of the first pixel to extract the three-dimensional environmental feature.

The AV 1308 associates 1616 the M-dimensional environmental feature 1360 with the odometry data 1348. In the example embodiment described in the previous paragraphs, the three-dimensional environmental feature is associated with the odometry data 1348. Errors that might result from sensor noise and the AV 1308's estimation of its directional orientation and location are thereby reduced. Associating the three-dimensional environmental feature with the odometry data 1348 enables the AV 1308 to addresses inaccuracies such as misidentified loop closures. The AV 1308 resolves such errors using the odometry data 1348 to close loops, i.e., recognize when two different spatiotemporal locations are incorrectly related and remove the relation between the two different spatiotemporal locations.

The AV 1308 generates 1620 an N-dimensional version of the M-dimensional environmental feature 1360, where N is less than M. In the example embodiment described in the previous paragraphs, the N-dimensional version of the M-dimensional environmental feature 1360 is a two-dimensional version of the three-dimensional environmental feature. The AV 1308 generates the two-dimensional version of the three-dimensional environmental feature by mapping the three-dimensional LiDAR point cloud data to a two-dimensional image. The AV 1308 extracts, from the two-dimensional image, edge pixels representing a shape of the target object 1320 using the Canny operator for edge detection. The extracted edge pixels are assembled into an outline of the object 1320 using the Hough transform to extract a polygon corresponding to the two-dimensional version of the three-dimensional environmental feature.

The AV 1308 embeds 1624 the N-dimensional version of the M-dimensional environmental feature 1360 within an N-dimensional map 1364 of the environment 1304. In the example embodiment described in the previous paragraphs, the two-dimensional version of the three-dimensional environmental feature is embedded within a two-dimensional map of the environment 1304. The AV 1308 embeds a semantic annotation 1504 corresponding to the environmental feature such that it becomes a source of information that is easy to interpret, combine and reuse by the AV 1308, the server 1312, or the vehicle 1316. For example, the semantic annotation 1504 may be a structured digital marginalia that is invisible in the human-readable part of the two-dimensional map. Because the semantic annotation 1504 is machine-interpretable, the semantic annotation 1504 enables the AV 1308 to perform operations such as classifying, linking, inferencing, searching, or filtering the two-dimensional map.

### Process for Automatic Generation of a Dimensionally Reduced Map

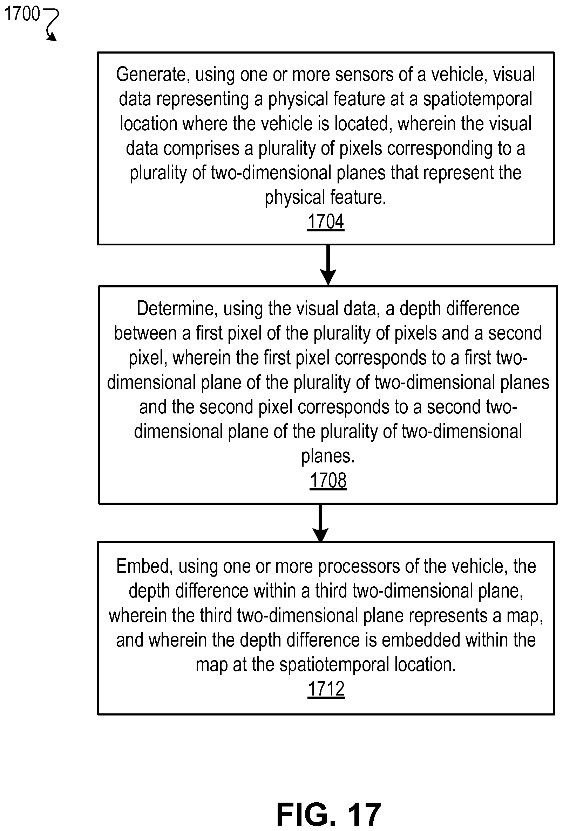

FIG. 17 illustrates a process 1700 for automatic generation of a dimensionally reduced map 1364 in an environment 1304 for navigation of the AV 1308, in accordance with one or more embodiments. In one embodiment, the process of FIG. 17 is performed by one or more components of the AV 1308, such as the N-dimensional map generator 1328. Other entities, such as the remote server 1312, perform some or all of the steps of the process 1700 in other embodiments. Likewise, embodiments may include different and/or additional steps, or perform the steps in different orders.

The AV 1308 uses one or more sensors 1336 to generate visual data 1344 representing a physical feature at a spatiotemporal location 1404 where the Av 1308 is located. The visual data 1344 includes a plurality of pixels corresponding to a plurality of two-dimensional planes that represent the physical feature. In one embodiment, used here as an example, the visual data 1344 is three-dimensional LiDAR point cloud data. In this embodiment, the AV 1308 uses the visual sensors 1336, for example the LiDAR 123 described above with reference to FIG. 1, to generate the three-dimensional LiDAR point cloud data.

The AV 1308 uses the visual data 1344 to determine 1708 a depth difference between a first pixel of the plurality of pixels and a second pixel. The first pixel corresponds to a first two-dimensional plane of the plurality of two-dimensional planes. The second pixel corresponds to a second two-dimensional plane of the plurality of two-dimensional planes. The AV 1308 thereby analyzes the point cloud map as an N-pixel image where N is the number of LIDAR beams. For each pixel in the image, the AV 1308 analyzes the depth difference with the pixel's neighboring pixels to determine vertical features.

The AV 1308 uses one or more processors 146 to embed 1712 the depth difference within a third two-dimensional plane. The third two-dimensional plane represents a map 1500. The depth difference is embedded within the map 1500 at the spatiotemporal location 1404. The AV 1308 embeds a semantic annotation 1504 corresponding to the physical feature such that it becomes a source of information that is easy to interpret, combine and reuse by the AV 1308, the server 1312, or the vehicle 1316. For example, the semantic annotation 1504 may be a structured digital marginalia that is invisible in the human-readable part of the two-dimensional map. Because the semantic annotation 1504 is machine-interpretable, the semantic annotation 1504 enables the AV 1308 to perform operations such as classifying, linking, inferencing, searching, or filtering the two-dimensional map 1500.

In the foregoing description, embodiments of the invention have been described with reference to numerous specific details that may vary from implementation to implementation. The description and drawings are, accordingly, to be regarded in an illustrative rather than a restrictive sense. The sole and exclusive indicator of the scope of the invention, and what is intended by the applicants to be the scope of the invention, is the literal and equivalent scope of the set of claims that issue from this application, in the specific form in which such claims issue, including any subsequent correction. Any definitions expressly set forth herein for terms contained in such claims shall govern the meaning of such terms as used in the claims. In addition, when we use the term "further comprising," in the foregoing description or following claims, what follows this phrase can be an additional step or entity, or a sub-step/sub-entity of a previously-recited step or entity.

### Embodiments

Although the present invention is defined in the attached claims, it should be understood that the present invention can also (alternatively) be defined in accordance with the following two Groups of embodiments:

### Group I

1. A method comprising:
   generating, using one or more sensors of a vehicle located at a spatiotemporal location within an environment, M-dimensional sensor data representing the environment, wherein M is greater than 2;
   generating, using the one or more sensors, odometry data representing an operational state of the vehicle, wherein the odometry data is associated with the spatiotemporal location; and
   generating, using one or more processors of the vehicle, an N-dimensional map of the environment from the M-dimensional sensor data, wherein N is less than M and the generating of the N-dimensional map comprises:
      extracting, from the M-dimensional sensor data, an M-dimensional environmental feature;
      associating the M-dimensional environmental feature with the odometry data; generating an N-dimensional version of the M-dimensional environmental feature; and
      embedding the N-dimensional version of the M-dimensional environmental feature within the N-dimensional map.
2. The method of embodiment 1, wherein the embedding of the N-dimensional version of the M- dimensional environmental feature comprises embedding a computer-readable semantic annotation corresponding to the N-dimensional version of the M-dimensional environmental feature within the N-dimensional map.
3. The method of embodiment 1 or 2, wherein the M-dimensional sensor data comprises three- dimensional LiDAR point cloud data and the generating of the N-dimensional version of the M-dimensional environmental feature comprises mapping the three-dimensional LiDAR point cloud data to a two-dimensional image.
4. The method of any of embodiments 1-3, wherein the M-dimensional sensor data comprises (M- 1)-dimensional LiDAR point cloud data indexed in accordance with time and the N-dimensional map comprises (N-1)-dimensional image data indexed in accordance with time.
5. The method of any of embodiments 1-4, further comprising mapping the M-dimensional sensor data to a plurality of planes, wherein each plane of the plurality of planes corresponds to a distinct N-dimensional map.
6. The method of any of embodiments 1-5, further comprising determining, using the odometry data, location coordinates of the vehicle relative to the N-dimensional map.
7. The method of any of embodiments 1-6, further comprising determining, using the odometry data, a directional orientation of the vehicle relative to the N-dimensional map.
8. The method of any of embodiments 1-7, further comprising transmitting the determined location coordinates and the directional orientation to a remote server or another vehicle to provide navigation assistance to the other vehicle.
9. The method of any of embodiments 1-8, wherein the one or more sensors comprise a controller area network (CAN) bus of the vehicle and the odometry data is generated using the CAN bus.
10. The method of any of embodiments 1-9, wherein the one or more sensors comprise an inertial measurement unit (IMU) of the vehicle and the odometry data is generated using the IMU.
11. The method of any of embodiments 1-10, wherein the odometry data comprises at least one of a speed, a steering angle, a longitudinal acceleration, or a lateral acceleration.
12. The method of any of embodiments 1-11, wherein the extracting of the M-dimensional environmental feature comprises:
   generating, from the M-dimensional sensor data, a plurality of pixels, wherein a number of the plurality of pixels corresponds to a number of LiDAR beams of the one or more sensors; and
   analyzing a depth difference between a first pixel of the plurality of pixels and neighboring pixels of the first pixel to extract the M-dimensional environmental feature.
13. The method of any of embodiments 1-12, wherein the extracting of the M-dimensional environmental feature comprises:
   generating, from the M-dimensional sensor data, a plurality of pixels; and
   extracting the M-dimensional environmental feature from the plurality of pixels, responsive to a depth difference between a first pixel of the plurality of pixels and neighboring pixels of the first pixel being less than a threshold.
14. The method of any of embodiments 1-13, wherein the associating of the M-dimensional environmental feature with the odometry data comprises at least one of correlating or probabilistic matching of the M-dimensional environmental feature to the spatiotemporal location.
15. The method of any of embodiments 1-14, further comprising:
   generating, using the one or more sensors of the vehicle located at a second spatiotemporal location within the environment, second M-dimensional sensor data representing the environment; and
   associating the second M-dimensional sensor data with the second spatiotemporal location to make the second M-dimensional sensor data distinct from the M- dimensional sensor data.
16. The method of any of embodiments 1-15, wherein the generating of the N-dimensional version of the M-dimensional environmental feature comprises counting instances of N-dimensional location coordinates of the M-dimensional environmental feature.
17. The method of any of embodiments 1-16, wherein the embedding of the N-dimensional version of the M-dimensional environmental feature comprises:
   responsive to a count of instances of N-dimensional location coordinates of the M-dimensional environmental feature exceeding a threshold, embedding N- dimensional location coordinates of the M-dimensional environmental feature within the N-dimensional map.
18. The method of any of embodiments 1-17, wherein the M-dimensional environmental feature represents at least one of a road segment, a construction zone, a curb, a building, a parking space located on a road segment, a highway exit or entrance ramp, or a parking lot.
19. The method of any of embodiments 1-18, wherein the M-dimensional environmental feature represents at least one of a marking on a road segment, a road sign located within the environment, a traffic signal, or a median separating two lanes.
20. The method of any of embodiments 1-19, wherein the M-dimensional environmental feature represents at least one of a vehicle, a pedestrian, or a cyclist.
21. The method of any of embodiments 1-20, wherein the M-dimensional environmental feature represents at least one of a splitting of a lane into a plurality of lanes, a merging of a plurality of lanes into a single lane, an intersection of a plurality of lanes, a roundabout comprising a spatial location for a vehicle to enter or exit the roundabout, or a curving of a lane along a road segment.
22. An autonomous vehicle comprising:
   one or more computer processors; and
   one or more non-transitory storage media storing instructions which, when executed by the one or more computer processors, cause performance of the method of any one of embodiments 1-21.
23. One or more non-transitory storage media storing instructions which, when executed by one or more computing devices, cause performance of the method of any one of embodiments 1- 21.
24. A method comprising performing a machine-executed operation involving instructions which, when executed by one or more computing devices, cause performance of the method of any one of embodiments 1-21,
   wherein the machine-executed operation is at least one of sending said instructions, receiving said instructions, storing said instructions, or executing said instructions.
25. A vehicle comprising:
   one or more sensors configured to:
      generate, at a spatiotemporal location within an environment within which the vehicle is located, M-dimensional sensor data representing the environment, wherein M is greater than 2; and
      generate odometry data representing an operational state of the vehicle, wherein the odometry data is associated with the spatiotemporal location; and
   one or more processors communicatively coupled to the one or more sensors and configured to generate an N-dimensional map of the environment from the M- dimensional sensor data, wherein N is less than M and the generating of the N- dimensional map comprises:
      extracting, from the M-dimensional sensor data, an M-dimensional environmental feature;
      associating the M-dimensional environmental feature with the odometry data; generating an N-dimensional version of the M-dimensional environmental feature; and
      embedding the N-dimensional version of the M-dimensional environmental feature within the N-dimensional map.

### Group II

26. A method comprising:
   generating, using one or more sensors of a vehicle, visual data representing a physical feature at a spatiotemporal location where the vehicle is located, wherein the visual data comprises a plurality of pixels corresponding to a plurality of two- dimensional planes that represent the physical feature;
   determining, using the visual data, a depth difference between a first pixel of the plurality of pixels and a second pixel, wherein the first pixel corresponds to a first two- dimensional plane of the plurality of two-dimensional planes and the second pixel corresponds to a second two-dimensional plane of the plurality of two- dimensional planes; and
   embedding, using one or more processors of the vehicle, the depth difference within a third two-dimensional plane, wherein the third two-dimensional plane represents a map,
   and wherein the depth difference is embedded within the map at the spatiotemporal location.
27. The method of embodiment 26, further comprising:
   generating, using the one or more sensors, odometry data corresponding to the spatiotemporal location; and
   associating, using the one or more processors, the depth difference with the odometry data.
28. The method of embodiment 26 or 27, wherein the determining of the depth difference is performed, responsive to the depth difference between the first pixel and the second pixel being less than a threshold.
29. The method of any one of embodiments 26-28, wherein the associating of the depth difference with the odometry data comprises correlating the depth difference to the spatiotemporal location.
30. The method of any one of embodiments 26-29, wherein the associating of the depth difference with the odometry data comprises probabilistically matching the depth difference to the spatiotemporal location.
31. The method of any one of embodiments 26-30, wherein the visual data comprises three-dimensional LIDAR point cloud data, the method further comprising:
   converting, using the embedding of the depth difference within the third two-dimensional plane, the three-dimensional LIDAR point cloud data to a two-dimensional image on the third two-dimensional plane.
32. The method of any one of embodiments 26-31, wherein the visual data comprises M-dimensional LIDAR point cloud data indexed in accordance with time and the map comprises N-dimensional image data indexed in accordance with time, and wherein N is less than M.
33. The method of any one of embodiments 26-32, wherein the embedding of the depth difference comprises inserting a computer-readable semantic annotation corresponding to the depth difference within the map.
34. The method of any one of embodiments 26-33, further comprising determining, using the odometry data, the spatiotemporal location of the vehicle relative to the map.
35. The method of any one of embodiments 26-34, further comprising determining, using the odometry data, a directional orientation of the vehicle relative to the map.
36. The method of any one of embodiments 26-35, further comprising transmitting, using a controller area network (CAN) bus of the vehicle, the visual data from the one or more sensors of the vehicle to the one or more processors.
37. The method of any one of embodiments 26-36, further comprising transmitting, using a controller area network (CAN) bus of the vehicle, the odometry data from an inertial measurement unit (IMU) of the vehicle to the one or more processors.
38. The method of any one of embodiments 26-37, wherein the odometry data comprises at least one of a speed, a steering angle, a longitudinal acceleration, or a lateral acceleration.
39. The method of any one of embodiments 26-38, wherein the determining of the depth difference comprises counting instances of two-dimensional location coordinates of the visual data.
40. The method of any one of embodiments 26-39, wherein the embedding of the depth difference comprises:
   responsive to a count of the instances of the two-dimensional location coordinates exceeding a threshold, inserting the depth difference at the two-dimensional location coordinates within the map.
41. The method of any one of embodiments 26-40, wherein the depth difference represents a portion of at least one of a road segment, a curb, a building, or a parking space.
42. The method of any one of embodiments 26-41, wherein the depth difference represents a portion of at least one of a marking on a road segment, a road sign, a traffic signal, or a lane separator.
43. The method of any one of embodiments 26-42, wherein the depth difference represents a portion of at least one of a vehicle, a pedestrian, or a cyclist.
44. An autonomous vehicle comprising:
   one or more computer processors; and
   one or more non-transitory storage media storing instructions which, when executed by the one or more computer processors, cause performance of the method of any one of embodiments 26-43.
45. One or more non-transitory storage media storing instructions which, when executed by one or more computing devices, cause performance of the method of any one of embodiments 26-43.
46. A method comprising performing a machine-executed operation involving instructions which, when executed by one or more computing devices, cause performance of the method of any one of embodiments 26-43, wherein the machine-executed operation is at least one of sending said instructions, receiving said instructions, storing said instructions, or executing said instructions.

## Claims

1. A method comprising:
generating, using one or more sensors (121, 122-123, 1336, 1344, 1348) of a vehicle (1316, 1428) located at a spatiotemporal location (104, 1404, 1520) within an environment (190, 1304, 1400), M-dimensional sensor data representing the environment (190, 1304, 1400), wherein M is greater than 2;
generating, using the one or more sensors (121, 122-123, 1336, 1344, 1348), odometry data (1348) representing an operational state of the vehicle (1316, 1428), the odometry data (1348) associated with the spatiotemporal location (104, 1404, 1520); and
generating, using one or more processors (146) of the vehicle (1316, 1428), an N-dimensional map (1364, 1500) of the environment (190, 1304, 1400) based on the M-dimensional sensor data, wherein N is less than M, the generating of the N-dimensional map (1364, 1500) comprising:
extracting, using the one or more processors (146), an M-dimensional environmental feature based on the M-dimensional sensor data;
associating, using the one or more processors (146), the M-dimensional environmental feature with the odometry data (1348);
generating, using the one or more processors (146), an N-dimensional version of the M-dimensional environmental feature; and
embedding, using the one or more processors (146), the N-dimensional version of the M-dimensional environmental feature within the N-dimensional map (1364, 1500).

2. The method of claim 1, wherein the embedding of the N-dimensional version of the M-dimensional environmental feature comprises embedding, using the one or more processors (146), a computer-readable semantic annotation (1504, 1524, 1532) corresponding to the N-dimensional version of the M-dimensional environmental feature within the N-dimensional map (1364, 1500).

3. The method of claim 1 or 2, wherein the generating of the N-dimensional version of the M-dimensional environmental feature comprises mapping, using the one or more processors (146), the three-dimensional LiDAR point cloud (202) data to a two-dimensional image (612, 702), the M-dimensional sensor data comprising three-dimensional LiDAR point cloud (202) data.

4. The method of any of claims 1 to 3, wherein the M-dimensional sensor data comprises (M-1)-dimensional LiDAR point cloud (202) data indexed in accordance with time, the N-dimensional map (1364, 1500) comprising (N-1)-dimensional image (612, 702) data indexed in accordance with time.

5. The method of any of claims 1 to 4, further comprising mapping, using the one or more processors (146), the M-dimensional sensor data to a plurality of planes, each plane of the plurality of planes corresponding to a distinct N-dimensional map (1364, 1500).

6. The method of any of claims 1 to 5, further comprising determining, using the one or more processors (146), location (1404) coordinates of the vehicle (1316, 1428) based on the odometry data (1348), the location (1404) coordinates being relative to the N-dimensional map (1364, 1500), and/or a directional orientation of the vehicle (1316, 1428) based on the odometry data (1348), the directional orientation being relative to the N-dimensional map (1364, 1500).
the method optionally further comprising transmitting, using the one or more processors (146), the determined location (1404) coordinates and/or the directional orientation to at least one of a remote server (136, 1308, 1312) or another vehicle (1316, 1428) to provide navigation assistance to the other vehicle (1316, 1428).

7. The method of any of claims 1 to 6, wherein the one or more sensors (121, 122-123, 1336, 1344, 1348) comprise one or more of:
a controller (1102) area network (320) - CAN - bus (302) of the vehicle (1316, 1428),
the odometry data (1348) generated using the CAN bus (302), and
an inertial measurement unit - IMU - of the vehicle (1316, 1428), the odometry data (1348) generated using the IMU,
and optionally wherein the odometry data (1348) comprises at least one of a speed (1112), a steering angle, a longitudinal acceleration (1120), or a lateral acceleration (1120).

8. The method of any of claims 1 to 7, wherein the extracting of the M-dimensional environmental feature comprises:
generating, using the one or more processors (146), a plurality of pixels based on the M-dimensional sensor data, a number of the plurality of pixels corresponding to a number of LiDAR beams of the one or more sensors (121, 122-123, 1336, 1344, 1348); and
analyzing, using the one or more processors (146), a depth difference between a first pixel of the plurality of pixels and neighboring pixels of the first pixel to extract the M-dimensional environmental feature.

9. The method of any of claims 1 to 8, wherein the extracting of the M-dimensional environmental feature comprises:
generating, using the one or more processors (146), a plurality of pixels based on the M-dimensional sensor data; and
extracting, using the one or more processors (146), the M-dimensional environmental feature from the plurality of pixels responsive to a depth difference between a first pixel of the plurality of pixels and neighboring pixels of the first pixel being less than a threshold.

10. The method of any of claims 1 to 9, wherein the associating of the M-dimensional environmental feature with the odometry data (1348) comprises at least one of correlating or probabilistic matching of the M-dimensional environmental feature to the spatiotemporal location (104, 1404, 1520).

11. The method of any of claims 1 to 10, further comprising:
generating, using the one or more sensors (121, 122-123, 1336, 1344, 1348) of the vehicle (1316, 1428), second M-dimensional sensor data representing the environment (190, 1304, 1400), the vehicle (1316, 1428) located at a second spatiotemporal location (1432) within the environment (190, 1304, 1400); and
associating, using the one or more processors (146), the second M-dimensional sensor data with the second spatiotemporal location (1432) to make the second M-dimensional sensor data distinct from the M-dimensional sensor data.

12. The method of any of claims 1 to 11, wherein the generating of the N-dimensional version of the M-dimensional environmental feature comprises counting, using the one or more processors (146), instances of N-dimensional location (1404) coordinates of the M-dimensional environmental feature.

13. The method of any of claims 1 to 12, wherein the embedding of the N-dimensional version of the M-dimensional environmental feature comprises:
responsive to a count of instances of N-dimensional location (1404) coordinates of the M-dimensional environmental feature exceeding a threshold, embedding, using the one or more processors (146), the N-dimensional location (1404) coordinates of the M-dimensional environmental feature within the N-dimensional map (1364, 1500),
or, wherein the M-dimensional environmental feature represents at least one of a road segment (1408), a construction zone (1416), a curb (1412), a building, a parking space located on a road segment (1408), a highway exit or entrance ramp, or a parking lot.

14. An autonomous vehicle (1316, 1428) comprising one or more computer processors (146) configured to perform the method of any of claims 1 to 13.

15. One or more non-transitory storage media storing instructions which, when executed by one or more computing devices (146), cause the one or more computing devices (146) to carry out the method of any of claims 1 to 13.
